# EUROPÄISCHE PATENTANMELDUNG

(11) **EP 4 276 381 A2**
(43) Veröffentlichungstag der Anmeldung: **15.11.2023**
(21) Anmeldenummer: 23161635.0
(22) Anmeldetag: 13.03.2023
(51) Int. Cl.: F24S 25/16, F24S 25/617, F24S 25/65, H02S 20/24, F24S 25/37, F24S 25/00, F24S 25/60

(54) **MONTAGESYSTEM ZUR MONTAGE VON PHOTOVOLTAIKMODULEN AUF DÄCHERN**

(30) Priorität: 10.05.2022 DE 202022102550 U
(71) Anmelder: Premium Mounting Technologies GmbH & Co. KG, 95346 Stadtsteinach (DE)
(72) Erfinder: Wagner, Marlon, 95364 Ludwigschorgast (DE); Pietrzak, Arnd, 10435 Berlin (DE)
(74) Vertreter: Jannig & Repkow Patentanwälte PartG mbB

(57) **Zusammenfassung**

Es wird ein Montagesystem zur Montage von Photovoltaikmodulen auf Dächern, insbesondere auf Flachdächern beschrieben, mit über dem Dach anzuordnenden Bodenschienen, und auf den Bodenschienen montierten Modulauflagen, an welchen die Photovoltaikmodule anbringbar sind. Das beschriebene Montagesystem zeichnet sich unter anderem dadurch aus, dass das Montagesystem auf das Dach stellbare und die Bodenschienen tragende Auflageteller umfasst, und dass die Auflageteller zur Befestigung von quer oder schräg zu den Bodenschienen verlaufenden Querstreben an den Auflagetellern ausgelegt sind.

## Beschreibung

Die vorliegende Erfindung betrifft eine Vorrichtung gemäß dem Oberbegriff der Patentansprüche 1, 8 und 12, das heißt ein Montagesystem zur Montage von Photovoltaikmodulen auf Dächern, insbesondere auf Flachdächern.

Photovoltaikmodule wandeln bekanntlich das Licht der Sonne direkt in elektrische Energie um. Es handelt sich im Allgemeinen um rechteckförmige Platten, die häufig auf Dächern von Gebäuden montiert sind.

Bekannte Montagesysteme zur Montage von Photovoltaikmodulen auf Dächern umfassen:
- direkt auf dem Dach oder einer darauf aufgelegten Schutzmatte anzuordnende Bodenschienen, die meistens durch Hohlkammerprofile aus Aluminium gebildet werden,
- auf den Bodenschienen montierbare Stützelemente, an welchen die Photovoltaikmodule und/oder sonstige Photovoltaikanlagen-Komponenten anbringbar sind, und
- Befestigungsvorrichtungen, beispielsweise in Form von Klemmen, zur Befestigung der Photovoltaikmodule und/oder sonstiger Photovoltaikanlagen-Komponenten an den Stützelementen.

Bei Bedarf können ferner quer zu den Bodenschienen verlaufende Querstreben, Kabelkanäle, Windschutzbleche, Ballaststeine, Ballaststoffwannen etc. vorgesehen werden.

Zumindest bei Flachdächern werden vorzugsweise unterschiedliche hohe Stützelemente verwendet, sodass die darauf angebrachten Photovoltaikmodule wunschgemäß gegenüber der Horizontalen geneigt und so besser zur Sonne ausgerichtet werden können.

Unter Flachdächern werden vorliegend Dächer verstanden, die keine oder eine nur sehr geringe Dachneigung, beispielsweise eine Dachneigung bis zu 10° aufweisen.

Ein wesentlicher Aspekt eines Montagesystems für Photovoltaikanlagen besteht darin, wie die einzelnen Montagesystem-Komponenten und die darauf anzubringenden Photovoltaikmodule miteinander zu verbinden sind. Die miteinander zu verbindenden Elemente müssen aus nachvollziehbaren Gründen möglichst einfach, schnell und sicher in ihrer bestimmungsgemäßen Relativlage miteinander verbindbar sein. Außerdem wäre es wünschenswert, wenn das Montagesystem mit geringem Aufwand individuell an die jeweils herrschenden Verhältnisse anpassbar wäre.

Diese Anforderungen werden von den bekannten Montagesystemen nicht oder zumindest nicht voll zufriedenstellend erfüllt.

Der vorliegenden Erfindung liegt daher die Aufgabe zugrunde, das Montagesystem gemäß dem Oberbegriff der Patentansprüche1 , 8, und 12 derart weiterzubilden, dass die Montagesystem-Komponenten besonders schnell und sicher in ihrer bestimmungsgemäßen Relativlage miteinander verbindbar sind, und zugleich selbst bei Verwendung von mechanisch weniger belastbaren Montagesystem-Komponenten ein mechanisch stark belastbares Montagesystem herstellbar ist.

Diese Aufgabe wird erfindungsgemäß durch die in den Patentansprüchen 1, 8, und 12 beanspruchten Montagesysteme gelöst.

Vorteilhafte Weiterbildungen der Erfindung sind der folgenden Beschreibung und den Figuren entnehmbar.

Die Erfindung wird nachfolgend anhand von Ausführungsbeispielen unter Bezugnahme auf die Figuren näher erläutert. Es zeigen
- Figur 1: eine perspektivische Ansicht einer Photovoltaikanlage mit einem im Folgenden näher beschriebenen Montagesystem,
- Figur 2: eine Draufsicht auf die in der Figur 1 gezeigte Photovoltaikanlage,
- Figur 3: eine Seitenansicht der in den Figuren 1 und 2 gezeigten Photovoltaikanlage,
- Figur 4: eine perspektivische Ansicht eines einen Teil einer Bodenschiene des Montagesystems bildenden Bodenschienenelements,
- Figur 5: eine perspektivische Ansicht eines kürzeren Bodenschienenelements gemäß Figur 4,
- Figur 6: eine perspektivische Ansicht eines ebenfalls einen Teil der Bodenschiene bildenden weiteren Bodenschienenelements,
- Figur 7: eine perspektivische Ansicht eines kürzeren Bodenschienenelements gemäß Figur 6,
- Figur 8: eine erste Seitenansicht eines in Figur 10 perspektivisch dargestellten Bodenschienen-Abschnitts,
- Figur 9: eine zweite Seitenansicht des in der Figur 10 perspektivisch dargestellten Bodenschienen-Abschnitts,
- Figur 10: eine perspektivische Ansicht des in den Figuren 8 und 9 in verschiedenen Seitenansichten gezeigten Bodenschienen-Abschnitts,
- Figur 11: eine vergrößerte Darstellung eines Teils der Figur 3, genauer gesagt eines benachbarte hohe Modulauflagen umfassenden Teils der Photovoltaikanlage,
- Figur 12: eine vergrößerte Ansicht eines anderen Teils der Figur 3, genauer gesagt eines benachbarte niedrige Modulauflagen umfassenden Teils der Photovoltaikanlage,
- Figur 13: eine der Figur 3 entsprechende Ansicht der Photovoltaikanlage, bei welcher die in den Figuren 6 und 7 gezeigten ersten Bodenschienenelemente und die in den Figu-ren 4 und 5 gezeigten zweiten Bodenschienenelemente in einer ersten vorbestimmten Relativlage miteinander verbunden sind,
- Figur 14: eine Draufsicht auf einen Teil der Bodenschiene, zur Veranschaulichung der Relativlage zweier benachbarter Bodenschienenelemente bei dem in der Figur 13 vorgenommenen Zusammenbau derselben,
- Figur 15: eine vergrößerte Darstellung eines Teils der Figur 13, zur Verdeutlichung der Neigung einer der hohen Modulauflagen in Bezug zur Bodenschiene bei der in der Figur 13 gezeigten Anordnung,
- Figur 16: eine der Figur 3 entsprechende Ansicht der Photovoltaikanlage, bei welcher die in den Figuren 6 und 7 gezeigten ersten Bodenschienenelemente und die in den Figu-ren 4 und 5 gezeigten zweiten Bodenschienenelemente in einer zweiten vorbestimmten Relativlage miteinander verbunden sind,
- Figur 17: eine Draufsicht auf einen Teil der Bodenschiene, zur Veranschaulichung der Relativlage zweier benachbarter Bodenschienenelemente bei dem in der Figur 16 vorgenommenen Zusammenbau derselben,
- Figur 18: eine vergrößerte Darstellung eines Teils der Figur 16, zur Verdeutlichung der Neigung einer der hohen Modulauflagen in Bezug zur Bodenschiene bei der in der Figur 16 gezeigten Anordnung,
- Figur 19: eine der Figur 3 entsprechende Ansicht der Photovoltaikanlage, bei welcher die in den Figuren 6 und 7 gezeigten ersten Bodenschienenelemente und die in den Figu-ren 4 und 5 gezeigten zweiten Bodenschienenelemente in einer zweiten vorbestimmten Relativlage miteinander verbunden sind,
- Figur 20: eine Draufsicht auf einen Teil der Bodenschiene, zur Veranschaulichung der Relativlage zweier benachbarter Bodenschienenelemente bei dem in der Figur 19 vorgenommenen Zusammenbau derselben,
- Figur 21: eine vergrößerte Darstellung eines Teils der Figur 19, zur Verdeutlichung der Neigung einer der hohen Modulauflagen in Bezug zur Bodenschiene bei der in der Figur 19 gezeigten Anordnung,
- Figur 22: eine Explosionsdarstellung eines zweiten Bodenschienenelements gemäß Figur 4 und der daran anzubringenden hohen Modulauflagen,
- Figur 23: eine perspektivische Ansicht der in der Figur 23 gezeigten Elemente im miteinander verbundenen Zustand,
- Figur 24: die in der Figur 23 gezeigte Anordnung in einem Zustand, in welchem die hohen Modulauflagen bis zum Anschlag nach unten geschwenkt sind,
- Figur 25: eine Explosionsdarstellung der in der Figur 23 gezeigten Anordnung und der daran anzubringenden Modulklemmen,
- Figur 26: eine perspektivische Ansicht der im Figur 25 gezeigten Elemente im miteinander verbundenen Zustand,
- Figur 27: eine der Figur 26 entsprechende perspektivische Ansicht, bei welcher jedoch an den hohen Modulauflagen nicht nur jeweils eine Modulklemme sondern zwei nebeneinander liegende Modulklemmen angebracht sind,
- Figur 28: eine perspektivische Ansicht eines zur Montage einer niedrigen Modulauflage bestimmten Bereiches eines ersten Bodenschienenelements gemäß den Figuren 6 und 7,
- Figur 29: das Bodenschienenelement gemäß Figur 28 mit einer darauf zu montierenden niedrigen Modulauflage,
- Figur 30: die Anordnung gemäß Figur 29 in einem Zustand, in welchem die niedrige Modulauflage auf das Bodenschienenelement aufgesetzt wurde,
- Figur 31: die Anordnung gemäß Figur 30 in einem Zustand, in welchem die niedrige Modulauflage in Längsrichtung des Bodenschienenelements bis zum Erreichen der bestimmungsgemäßen Endlage und Verrasten in dieser Position verschoben wurde,
- Figur 32: eine Explosionsdarstellung einer niedrigen Modulauflage und einer daran anzubringenden Modulklemme,
- Figur 33: eine Explosionsdarstellung einer niedrigen Modulauflage und zwei daran anzubringenden Modulklemmen,
- Figur 34: eine Seitenansicht einer Anordnung, bei welcher eine niedrige Modulauflage mit daran angebrachter Modulklemme auf einem Bodenschienenelement montiert ist, und ein Photovoltaikmodul auf die nach hinten geklappte Modulklemme gestellt ist,
- Figur 35: die in der Figur 34 gezeigte Anordnung in einem Zustand, in welchem die Modulklemme am Photovoltaikmodul festgeklemmt ist,
- Figur 36: die in der Figur 35 gezeigte Anordnung in einem Zustand, in welchem die Modulklemme zusammen mit dem festgeklemmten Photovoltaikmodul nach vorne geschwenkt ist,
- Figur 37: eine perspektivische Ansicht eines zwischen den Bodenschienen und dem Dach zu liegen kommenden Auflagetellers,
- Figur 38: eine Seitenansicht einer Anordnung, bei welcher der Auflageteller zusätzlich als Auflage für einen Ballaststein verwendet wird,
- Figur 39: eine perspektivische Ansicht einer Anordnung, bei welcher ein Ballaststein auf zwei quer zu den Bodenschienen verlaufenden, an den hohen Modulauflagen befestigten Querschienen aufliegt,
- Figur 40: eine perspektivische Ansicht einer Anordnung, bei welcher ein Ballaststein auf zwei quer zu den Bodenschienen verlaufenden, an den Bodenschienen befestigten Querschienen aufliegt,
- Figur 41A: eine perspektivische Ansicht eines modifizierten Auflagetellers mit darauf aufgesetzter Bodenschiene,
- Figur 41B: eine Seitenansicht der in der Figur 41A gezeigten Anordnung,
- Figur 41C: eine Draufsicht auf die in der Figur 41A gezeigte Anordnung,
- Figur 42A: eine perspektivische Ansicht der in der Figur 41 gezeigten Anordnung, mit einer zusätzlichen, am Auflageteller befestigten Querstrebe,
- Figur 42B: eine Seitenansicht der in der Figur 42A gezeigten Anordnung,
- Figur 42C: eine Draufsicht auf die in der Figur 42A gezeigte Anordnung,
- Figur 43A: eine perspektivische Explosionsdarstellung dreier durch modifizierte Rastverbindungen miteinander verbindbarer Montagesystem-Komponenten,
- Figur 43B: verschiedene Seitenansichten der in der Figur 43A gezeigten Anordnung,
- Figur 43C: eine Draufsicht auf die in der Figur 43A gezeigte Anordnung,
- Figur 44: eine vergrößerte Darstellung des in der Figur 43A mit A bezeichneten Bereiches,
- Figuren 45A bis 45D: verschiedene perspektivische Ansichten einer Zunge, die an einer der in der Figur 44 gezeigten Bodenschienen-Elemente vorgesehen ist und einen Teil eines Rastmechanismus bildet,
- Figur 45E: verschiedene Seitenansichten der in den Figuren 45A bis 45D gezeigten Zunge,
- Figur 45F: eine Draufsicht der in den Figuren 45A bis 45D gezeigten Zunge,
- Figur 45G: eine Unteransicht der in den Figuren 45A bis 45D gezeigten Zunge,
- Figur 46: eine vergrößerte Darstellung des in der Figur 43A mit B bezeichneten Bereiches,
- Figur 47: eine der Figur 46 entsprechende Darstellung, wobei ein darin gezeigten Klemmenträger für die Sichtbarmachung verdeckter Abschnitte unvollständig dargestellt ist,
- Figuren 48A bis 48D: verschiedene perspektivische Ansichten einer Zunge, die an dem in der Figur 47 gezeigten Klemmenträger vorgesehen ist und einen Teil eines Rastmechanismus bildet,
- Figur 48E: verschiedene Seitenansichten der in den Figuren 48A bis 48D gezeigten Zunge,
- Figur 48F: eine Draufsicht der in den Figuren 48A bis 48D gezeigten Zunge, und
- Figur 48G: eine Unteransicht der in den Figuren 48A bis 48D gezeigten Zunge.

Das im Folgenden näher beschriebene Montagesystem ist ein Montagesystem zur Montage von Photovoltaikmodulen auf Flachdächern. Unter Flachdächern werden vorliegend Dächer verstanden, die keine oder eine nur sehr geringe Dachneigung, beispielsweise eine Dachneigung bis zu 10° aufweisen. Das Montagesystem kann bei einer entsprechenden Anpassung an die gegebenen Verhältnisse sogar auch bei noch stärker geneigten Dächern zum Einsatz kommen.

Die unter Verwendung des Montagesystems auf dem Dach zu montierenden Photovoltaikmodule sind in den Figuren mit dem Bezugszeichen 1 bezeichnet. Das die Photovoltaikmodule 1 tragende Montagesystem umfasst im betrachteten Beispiel
- auf das Dach aufgesetzte Auflageteller 2,
- auf die Auflageteller 2 aufgesetzte und mit diesen verbundene Bodenschienen 3, wobei mehrere parallel zueinander verlaufende, eine Bodenschienen-Reihe bildende Bodenschienen 3 vorgesehen sind, und jede der Bodenschienen auf mindestens zwei Auflagetellern 2 aufliegt,
- an den Bodenschienen 3 angebrachte und die Photovoltaikmodule tragende und in ihrer bestimmungsgemäßen Position und Lage haltende Modulauflagen 4, 5, genauer gesagt niedrige Modulauflagen 4 und hohe Modulauflagen 5,
- rechtwinklig zu den Bodenschienen 3 verlaufende, mit den Bodenschienen 3 oder den hohen Modulauflagen 5 verbundene Querstreben 6,
- Ballaststeine 7, und
- Windschutzbleche 8.

Bei Bedarf können ferner Kabelkanäle, Ballaststoffwannen und/oder sonstige Photovoltaikanlagen-Komponenten vorgesehen werden.

Die Photovoltaikmodule 1 sind im betrachteten Beispiel rechteckige Platten mit einem diese seitlich umlaufenden, beispielsweise aus Aluminium gefertigten Rahmen 11. Die Photovoltaikmodule 1 sind im betrachteten Beispiel in einer 3 Reihen R1, R2, R3 und 3 Spalten S1, S2, S1 umfassenden Matrix angeordnet, wobei die Anzahl der Reihen und die Anzahl der Spalten unabhängig voneinander beliebig groß sein können. Eine aus mehreren Reihen und/oder mehreren Spalten bestehende Matrix wird im Folgenden als Photovoltaikmodul-Feld bezeichnet.

Die Photovoltaikmodule 1 sind vorzugsweise nicht parallel zur Dachfläche angeordnet, sondern zur besseren Ausrichtung auf die Sonne gegenüber der Dachfläche geneigt. Die Neigung hängt unter anderem von den am Aufstellungsort herrschenden Verhältnissen ab.

Normalerweise sind die Photovoltaikmodule möglichst so geneigt, dass deren lichtempfindliche Oberfläche der im Süden stehenden Sonne zugewandt ist, also so, dass die dem Süden zugewandten Kanten der Photovoltaikmodule tiefer liegen als die dem Norden zugewandten Kanten.

Eine solche Ausrichtung der Photovoltaikmodule ist aber nicht in jedem Fall optimal. Dies ist beispielsweise der Fall, wenn ein vorhandenes Hindernis einen Schatten auf das Dach wirft, wenn die Sonne im Süden steht. Und es können auch bauliche Gründe gegen eine Ausrichtung der Photovoltaikmodule nach Süden erschweren, beispielsweise wenn das Dach einen Aufbau oder eine Form aufweist, die bestimmte Photovoltaikmodul-Ausrichtungen nicht oder nur mit unverhältnismä-ßig großem Aufwand realisieren lässt.

In solchen Fällen kann vorgesehen werden, die Photovoltaikmodule so zu neigen, dass deren lichtempfindliche Oberfläche der im Osten oder der im Westen stehenden Sonne zugewandt ist, also so, dass die dem Osten zugewandten Kanten der Photovoltaikmodule tiefer liegen als die dem Westen zugewandten Kanten, oder umgekehrt.

Eine solche Ausrichtung der Photovoltaikmodule 1 liegt auch bei dem vorliegend näher beschriebenen Beispiel vor. Es sei jedoch ausdrücklich bereits an dieser Stelle darauf hingewiesen, dass das hier vorgestellte Montagesystem ohne oder mit nur geringfügigen Anpassungen auch zur Montage anders geneigter Photovoltaikmodule 1 zum Einsatz kommen kann, beispielsweise auch in Anlagen, bei welchen alle Photovoltaikmodule auf die im Süden stehende Sonne ausgerichtet sind. Es besteht auch keine zwingende Notwendigkeit, dass die Photovoltaikmodule 1 - wie im betrachteten Beispiel - unterschiedlich ausgerichtet sind; es können auch alle Photovoltaikmodule genau gleich geneigt sein.

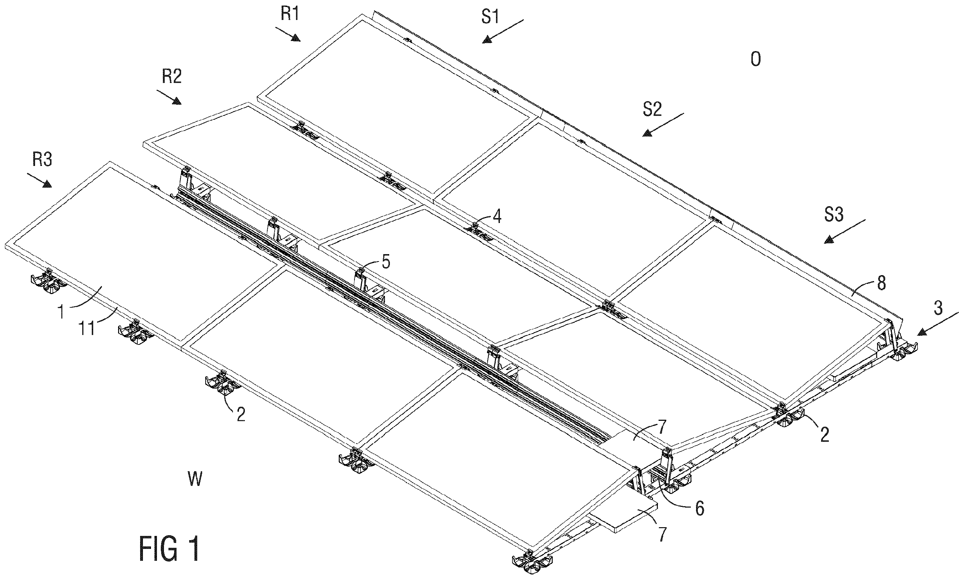

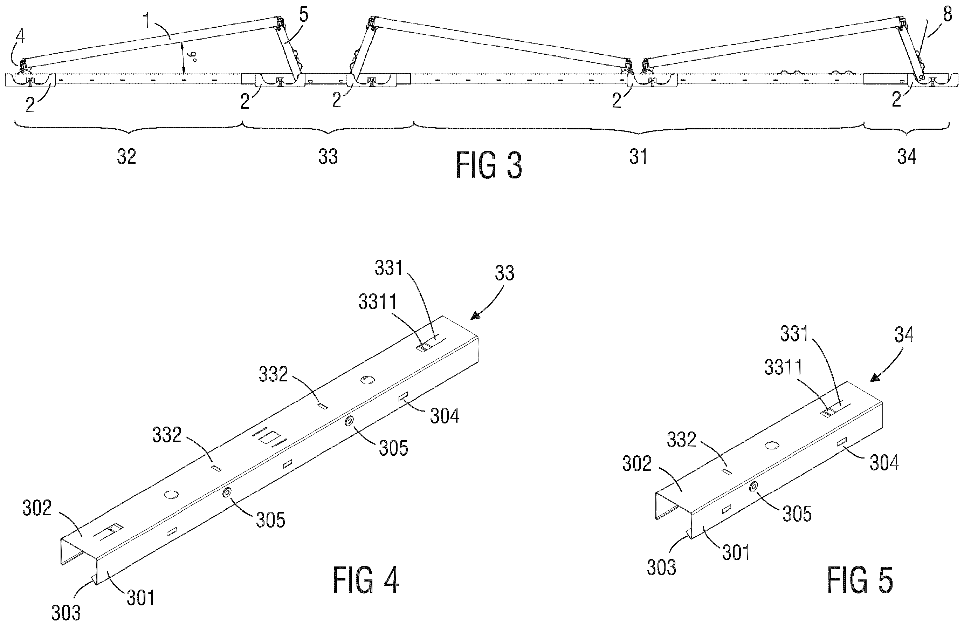

Wie insbesondere aus den Figuren 1 und 3 ersichtlich ist, sind die Photovoltaikmodule 1 der Photovoltaikmodul-Reihe R2 auf die im Osten O stehende Sonne ausgerichtet, und die Photovoltaikmodule 1 der Photovoltaikmodul-Reihen R1 und R3 auf die im Westen W stehende Sonne ausgerichtet.

Die vorliegend betrachtete Photovoltaikanlage ist ein areodynamisches System. Das heißt, sie wird einfach nur auf das Dach gestellt und durch das Eigengewicht oder durch zusätzlichen Ballast in seiner bestimmungsgemäßen Position gehalten und gegen ein Abheben gesichert. Bei größeren Dachneigungen kann vorgesehen werden, die auf dem Dach zu liegen kommenden Anlagenkomponenten, im betrachteten Beispiel also die Auflageteller 2, teilweise am Dach zu befestigen. Das heißt, einige wenige ausgewählte, aber nicht alle Auflageteller 2 können bei Bedarf durch Schrauben oder auf sonstige Art und Weise am Dach befestigt werden.

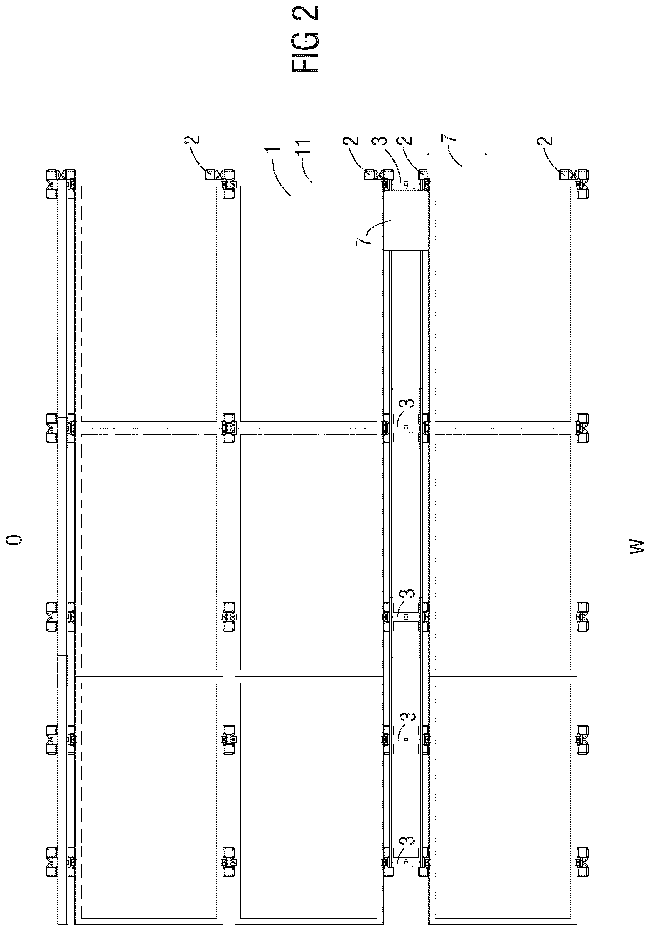

Eine der Besonderheiten des hier vorgestellten Montagesystems besteht darin, dass die Photovoltaikmodule 1 so auf dem Montagesystem angeordnet sind, dass die Längsseiten der (rechteckförmigen) Photovoltaikmodule 1 senkrecht zu den Bodenschienen 3 verlaufen, und dass die Modulauflagen 4, 5, welche als Photovoltaikmodul-Auflage und zur Befestigung der Photovoltaikmodule 1 am Montagesystem dienen, entlang der Längsseiten der Photovoltaikmodule 1 angeordnet sind, also die Längsseiten der Photovoltaikmodule, genauer gesagt die Rahmen 11 derselben mit dem Montagesystem verbinden. Da die Modulauflagen 4, 5 auf den Bodenschienen 3 montiert sind, und ohne Inkaufnahme von Nachteilen beliebig viele und beliebig weit voneinander beabstandete Bodenschienen 3 vorgesehen werden können, kann durch eine geeignete Festlegung der Anzahl und der Abstände der Bodenschienen 3 eine optimal an die gegebenen Verhältnisse angepasste Befestigung der Photovoltaikmodule erfolgen. Insbesondere ist es auch möglich, die Abstände zwischen benachbarten Bodenschienen 3 zu variieren. Bei der in den Figuren 1 und 2 gezeigten Photovoltaikanlage sind die Abstände zwischen benachbarten Bodenschienen 3 und damit auch die Abstände zwischen benachbarten Modulauflagen 4, 5 in der linken Hälfte kleiner als in der rechten Hälfte des Photovoltaikmodul-Feldes. Dies hat den positiven Effekt, dass der linke Bereich höheren mechanischen Belastungen, beispielsweise höheren Windlasten oder höheren Schneelasten ausgesetzt werden kann. Somit ist es mit sehr geringem Aufwand möglich, für jeden Bereich des Photovoltaikmodul-Feldes eine individuell an die zu erwartende Belastung angepasste Photovoltaikmodul-Befestigung vorzusehen. Und dies wiederum ermöglicht es, dass 1hotovoltaikmodule 1 mit größerer Länge und/oder größerer Breite verwendet werden.

Anders als bei den bekannten Montagesystemen liegen bei dem hier vorgestellten Montagesystem die Bodenschienen 3 nicht mehr direkt auf dem Dach oder einer dazwischen vorgesehenen Schutzmatte auf, sondern auf den bereits erwähnten Auflagetellern 2. Diese Auflageteller bestehen im betrachteten Beispiel aus Kunststoff, könnten prinzipiell aber auch aus einem beliebigen anderen Material bestehen. Im betrachteten Beispiel werden sie direkt, insbesondere ohne eine dazwischen liegende Schutzmatte auf das Dach aufgesetzt. Die mit dem Dach in Kontakt kommenden Auflagetellerabschnitte sind so beschaffen, dass sie keine scharfen Kanten und Ecken aufweisen, die die Dachhaut beschädigen könnten, und dass sich eine gewünschte Reibung zwischen Dach und Auflageteller einstellt. Diese Reibung wird so eingestellt, dass einerseits die Auflageteller 2 selbst bei ungünstigem Wind und Wetter auch ohne eine Befestigung am Dach unverrückbar auf diesem stehen bleiben, und dass aber andererseits Beschädigungen der Dachhaut durch eine zu starke Haftung der Auflageteller auf dem Dach verhindert werden. Die Einstellung der Reibung erfolgt durch eine entsprechende Wahl der Größe der Auflagefläche und deren Oberflächenbeschaffenheit.

Obgleich es im betrachteten Beispiel wie erwähnt nicht vorgesehen ist, kann zwischen Auflageteller 2 und Dach eine (in den Figuren nicht gezeigte) Schutzmatte vorgesehen werden.

Die Verwendung der Auflageteller 2 bietet den Vorteil, dass die Größe der Fläche, über welche das Montagesystem mit dem Dach in Kontakt kommt, unabhängig vom Aufbau und der Geometrie der weiteren Montagesystem-Komponenten wählbar ist. Wie insbesondere aus den Figuren 1 bis 3 und 37 ersichtlich ist, weisen die Auflageteller 2 eine im Wesentlichen quadratische Auflagefläche auf, deren Breite größer ist als die Breite der Bodenschienen 3. Über die Größe der Auflagefläche jedes einzelnen Auflagetellers 2, und über die Anzahl der zum Einsatz kommenden Auflageteller 2 und deren Verteilung lässt es sich individuell einstellen, an welcher Stelle des Daches welche Kräfte in dieses eingeleitet werden.

Die Verwendung der Auflageteller 2 bietet ferner den Vorteil, dass man bei der Festlegung der Geometrie der von diesen getragenen Bodenschienen 3 mehr Freiheiten hat. Insbesondere sind die Breite der Bodenschienen 3 und die Ausbildung der Unterseite derselben weniger Einschränkungen unterworfen als bisher.

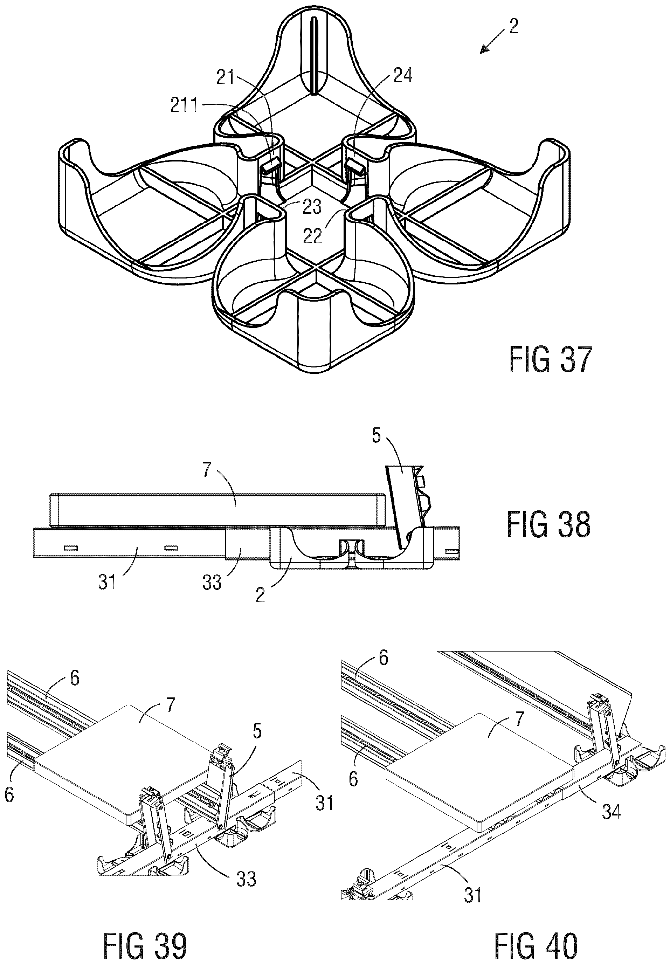

Auf die Auflageteller 2 sind jeweils die Bodenschienen 3 aufgesetzt. Dies ist beispielsweise in Figur 40 gut erkennbar dargestellt. Das Aufsetzen der Bodenschiene 3 erfolgt durch eine von oben nach unten verlaufende Bewegung der Bodenschiene 3. Die Bodenschiene 3 kommt im auf den Auflageteller 2 aufgesetzten Zustand zwischen zwei einander parallel gegenüber liegenden vertikalen Flächen 21, 22 zu liegen. An diesen, insbesondere in der Figur 37 gut erkennbaren vertikalen Flächen 21, 22 sind Rastnasen 211 ausgebildet, die beim bestimmungsgemäßen Zusammenbau von Auflageteller 2 und Bodenschiene 3 in zugeordnete Rastöffnungen 304 der Bodenschiene 3 einrasten und damit den Auflageteller 2 und die Bodenschiene 3 miteinander verbinden. Der Vollständigkeit halber sei in diesem Zusammenhang erwähnt, dass der Abstand zwischen den vertikalen Flächen 21, 22 der Breite der Bodenschiene 3 entspricht und die vertikalen Flächen 21, 22 elastisch bewegbar und/oder verformbar sind. Die vertikalen Flächen 21, 22 liegen daher im verrasteten Zustand seitlich an der Bodenschiene 3 an und verhindern eine Bewegung der Bodenschiene 3 in diese Richtung.

Vorzugsweise ist die Ausdehnung der Rastöffnung 304 in Längsrichtung der Bodenschiene 3 größer als die Ausdehnung der Rastnasen 211 in dieser Richtung. Dadurch ist es möglich, dass sich die Bodenschiene 3 relativ zum Auflageteller 2 in Längsrichtung der Bodenschiene 3 bewegen kann. Dies hat den positiven Effekt, dass durch Temperaturschwankungen verursachte Veränderungen der Länge der Bodenschiene 3 möglich sind, ohne den Auflageteller 2 auf dem Dach zu verschieben.

Der Auflageteller 2 kann zwischen den vertikalen Flächen 21, 22 zwei weitere, einander parallel gegenüber liegende zweite vertikale Flächen 23, 24 aufweisen, die jedoch horizontal (um eine vertikale Achse) um 90° zu den vertikalen Flächen 21, 22 gedreht sind. Auch zwischen den zweiten vertikalen Flächen 23, 24 kann eine Bodenschiene 3 eingesetzt und durch eine wie zuvor beschrieben erfolgende Rastverbindung daran befestigt werden. Genauer gesagt kann die Bodenschiebe 3 wahlweise zwischen den vertikalen Flächen 21, 22 oder zwischen den vertikalen Flächen 23, 34 zu liegen kommen.

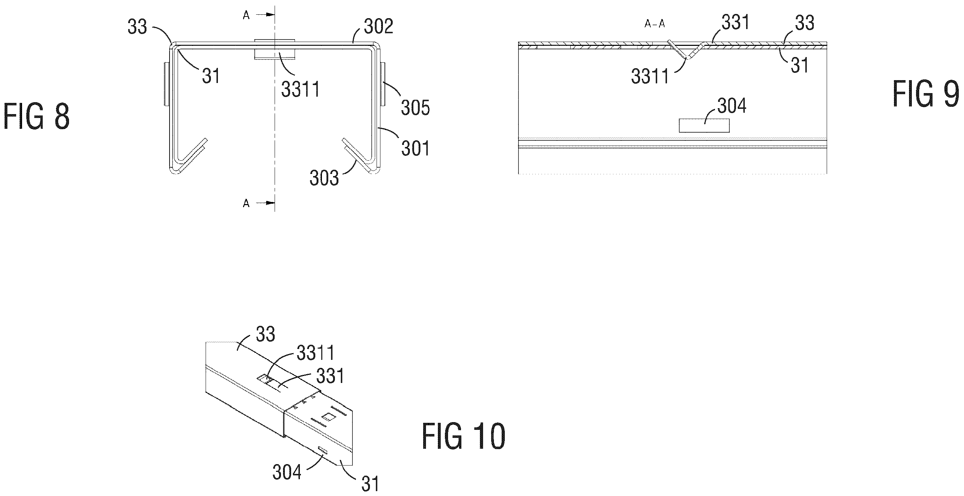

In diesem Zusammenhang sei angemerkt, dass die Bodenschiene 3 wie insbesondere aus Figur 8 ersichtlich einen im Wesentlichen C-förmigen Querschnitt aufweist und mit der offenen Seite voraus auf den Auflageteller 2 aufgesetzt wird. Deshalb, und weil von denjenigen vertikalen Flächen 21 - 24 des Auflagetellers 2, die nicht wie beschrieben mit der Bodenschiene 3 verrasten, so geformt und bemessen sind, dass sie, genauer gesagt die sie aufweisenden Auflageteller-Abschnitte innerhalb des von den Schenkeln der Bodenschiene 3 umschlossenen Bereiches zu liegen kommen können, wird das Aufsetzen der Bodenschiene 3 über diese jeweils nicht benutzten Auflageteller-Abschnitte nicht behindert. Ganz im Gegenteil: diese Auflageteller-Abschnitte können sogar eine die Bodenschiene 3 beim Aufsetzen führende Funktion haben.

Im betrachteten Beispiel unterscheidet sich der gegenseitige Abstand zwischen den vertikalen Flächen 21, 22 vom gegenseitigen Abstand zwischen den zweiten vertikalen Flächen 23, 24. Dies ermöglicht es, den Auflageteller 2 für unterschiedlich breite Bodenschienen 3 oder unterschiedlich breite Bodenschienen-Abschnitte zu verwenden. Der Auflageteller 2 und die Bodenschiene 3 müssen nur so zueinander ausgerichtet werden, dass die Bodenschiene 3, genauer gesagt der auf den Auflageteller 2 aufzusetzende Bodenschienen-Abschnitt zwischen denjenigen vertikalen Flächen zu liegen kommt, deren Abstand der Breite des betreffenden Bodenschienen-Abschnittes entspricht. Wie später noch näher erläutert werden wird, sind die Bodenschienen 3 im betrachteten Beispiel aus mehreren, der Länge nach abwechselnd aufeinander folgenden ersten Bodenschienenelementen 31, 32 und zweiten Bodenschienenelementen 33, 34 zusammengesetzt, wobei, wie insbesondere aus den Figuren 8 bis 10 ersichtlich ist, die ersten Bodenschienenelemente 31, 32 in die zweiten Bodenschienenelemente 33, 34 eingeschoben werden und daher eine geringere Breite als die die zweiten Bodenschienenelemente 33, 34 aufweisen. Aufgrund der verschiedenen Abstände zwischen den vertikalen Flächen 21, 22 und den zweiten vertikalen Flächen 23, 24 und eine entsprechende Anpassung derselben an unterschiedlichen Breiten der ersten Bodenschienenelemente 31, 32 in der zweiten Bodenschienenelemente 33, 34 kann der Auflageteller 2 sowohl aus Auflage für durch die ersten Bodenschienenelemente 31, 32 gebildete Bodenschienen-Abschnitte als auch als Auflage für durch die zweiten Bodenschienenelemente 33, 34 gebildete Bodenschienen-Abschnitte dienen.

Der Auflageteller 2 und die Bodenschiene 3 sind ferner so aneinander angepasst, dass die am weitesten nach oben ragenden Abschnitte des Auflagetellers 2 bündig mit der Oberseite der bestimmungsgemäß auf den Auflageteller 2 aufgesetzten Bodenschiene 3 abschließen. Dadurch kann der Auflageteller 2 auch als eine zusätzliche Auflage für auf die Bodenschiene 3 aufzulegende Gegenstände verwendet werden. Solche Gegenstände sind beispielsweise, aber nicht ausschließlich die Ballaststeine 7. Wie insbesondere aus den Figuren 1, 2 und 38 ersichtlich ist, kann ein Ballaststein 7 so aufgelegt werden, dass er sowohl auf der Bodenschiene 3 als auch auf dem diese tragenden Auflageteller 2 aufliegt. Vor allem, wenn sich die am weitesten nach oben ragenden Abschnitte des Auflagetellers 2 wie im betrachteten Beispiel in den Ecken des Auflagetellers 2 befinden, liegt der Ballaststein auf weit neben der Bodenschiene 3 vorhandenen Auflagepunkten auf und ist so gut gegen ein Herunterrutschen von der Bodenschiene gesichert.

Der Vollständigkeit halber sei in diesem Zusammenhang angemerkt, dass auch auf den senkrecht zu den Bodenschienen 3 verlaufenden Querstreben 6, die wie in der Figur 39 gezeigt an den Modulauflagen 5, genauer gesagt an den Klemmenträgern 52 derselben angebracht sind, oder die wie in Figur 40 gezeigt an den Bodenschienen 3 angebracht sind, Ballaststeine 7 aufgelegt werden können.

Wie vorstehend bereits erwähnt wurde, und beispielsweise aus der Figur 3 ersichtlich ist, sind die Bodenschienen 3 jeweils aus mehreren hintereinander in Reihe angeordneten und miteinander verbundenen Bodenschienenelementen zusammengesetzt. Diese Bodenschienenelemente umfassen erste Bodenschienenelemente 31, 32 und zweite Bodenschienenelemente 33, 34, die abwechselnd aufeinander folgen.

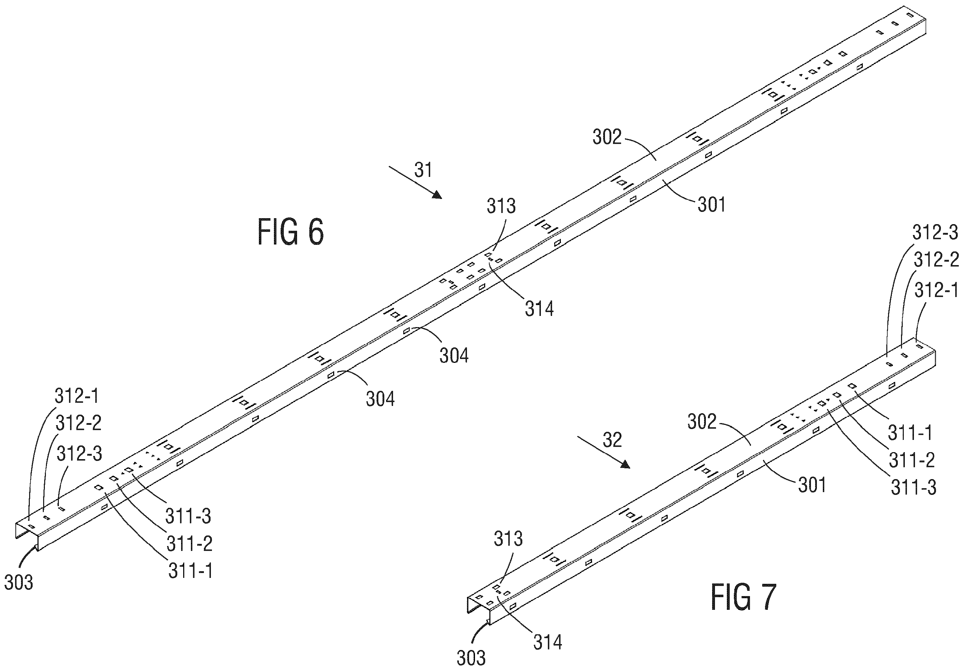

Von den genannten Bodenschienenelementen ist das erste Bodenschienenelement 31 in Figur 6 gezeigt, das erste Bodenschienenelement 32 in Figur 7, das zweite Bodenschienenelement 33 in Figur 4, und das zweite Bodenschienenelement 34 in Figur 5.

Die ersten Bodenschienenelemente 31, 32 unterscheiden sich im Wesentlichen nur durch ihre Länge. Das kürzere erste Bodenschienenelement 32 ist im betrachteten Beispiel ungefähr halb so lang wie das längere erste Bodenschienenelement 31 und kommt vorliegend zum Einsatz, wenn daran nur eine einzige hohe Modulauflage 5 anzubringen ist, also wenn das betreffende Bodenschienenelement das vordere oder hintere Ende einer jeweiligen Bodenschiene 3 bildet. Das längere erste Bodenschienenelement 31 kommt im betrachteten Beispiel zum Einsatz, wenn daran zwei hohe Modulauflagen 5 anzubringen sind, also wenn das betreffende Bodenschienenelement zwischen zwei zweiten Bodenschienenelementen 33, 34 zu liegen kommt.

Entsprechendes gilt für die zweiten Bodenschienenelemente 33, 34. Auch diese unterscheiden sich im Wesentlichen nur durch ihre Länge. Das kürzere zweite Bodenschienenelement 34 ist im betrachteten Beispiel ungefähr halb so lang wie das längere zweite Bodenschienenelement 33 und kommt vorliegend zum Einsatz, wenn daran nur eine einzige niedrige Modulauflage 4 anzubringen ist, also wenn das betreffende Bodenschienenelement das vordere oder hintere Ende einer jeweiligen Bodenschiene 3 bildet. Das längere zweite Bodenschienenelement 33 kommt im betrachteten Beispiel zum Einsatz, wenn daran zwei niedrige Modulauflagen 4 anzubringen sind, also wenn das betreffende Bodenschienenelement zwischen zwei ersten Bodenschienenelementen 31, 32 zu liegen kommt.

Wie insbesondere aus den Figuren 4 bis 8 ersichtlich ist, weisen die Bodenschienenelemente 31 - 34 jeweils einen im Wesentlichen C-förmigen Querschnitt auf, mit - bezogen auf die bestimmungsgemäße Lage der Bodenschienenelemente auf dem Auflageteller 2 - zwei einander mit Abstand parallel gegenüber liegenden vertikalen Schenkeln 301 und einem die oberen Enden derselben verbindenden horizontalen Schenkel 302, wobei die unteren Enden 303 der vertikalen Schenkel unter Bildung eines spitzen Winkels nach innen gebogen sind. Die Bodenschienenelemente bestehen im betrachteten Beispiel aus Stahl, könnten aber auch aus einem anderen Material bestehen.

Die Bodenschienenelemente 31 - 34 weisen in ihren horizontalen und vertikalen Schenkeln diverse Aussparungen und sonstige Strukturen auf.

Hierzu gehören unter anderem die vorstehend bereits erwähnten, den Rastnasen 211 der Auflageteller 2 zugeordneten Rastöffnungen 304. Diese Rastöffnungen 304 sind an beiden vertikalen Schenkeln 301 aller Bodenschienenelemente 31 - 34 vorgesehen. An jedem vertikalen Schenkel jedes Bodenschienenelements 31 - 34 ist eine Vielzahl solcher Rastöffnungen 304 vorgesehen. Genauer gesagt ist jeweils eine sich in Längsrichtung der Bodenschienenelemente verlaufende und sich über die gesamte Länge der Bodenschienenelemente erstreckende Reihe von Rastöffnungen 304 vorgesehen. Die vielen Rastöffnungen 304 ermöglichen es, dass die Position jedes Auflagetellers 2 aus einer Vielzahl von möglichen Positionen auswählbar ist, und/oder dass die Anzahl der verwendeten Auflageteller 2 innerhalb weiter Grenzen festlegbar ist, sodass also eine sehr flexible Anpassung der Anzahl und der Positionen der Auflageteller an die gegebenen Verhältnisse erfolgen kann.

An den vertikalen Schenkeln 301 der zweiten Bodenschienenelemente 33, 34 sind ferner einander gegenüberliegende Ausbuchtungen 305 vorgesehen, in deren Mitte sich jeweils ein zum Einstecken eine Niete ausgelegtes Loch befindet. Die Ausbuchtungen 305 sind zur Aufnahme der zwischen den vertikalen Schenkeln 301 zu liegenden kommenden Nieten-Köpfe vorgesehen, damit diese nicht in den von Bodenschienenelemente-Schenkeln 301, 302 umschlossenen Raum hineinragen.

Dies ermöglicht ein unbehindertes Einschieben der ersten Bodenschienenelemente 31, 32 in die zweiten Bodenschienenelemente 33, 34. Ein solches Ineinanderschieben ist für die im betrachteten Beispiel gewählte Art der Verbindung von benachbarten Bodenschienenelementen erforderlich. Hierauf wird später noch genauer eingegangen. Die besagten Nieten dienen zur Befestigung der an den zweiten Bodenschienenelementen 33, 34 anzubringenden Modulauflagen, genauer gesagt zum Anbringen der hohen Modulauflagen 5. Auch hierauf wird später noch genauer eingegangen.

Auf den horizontalen Schenkeln 302 der zweiten Bodenschienenelemente 33, 34 sind ein oder mehrere elastisch bewegbare Zungen 331 ausgebildet, welche durch einen U-förmigen Einschnitt in den horizontalen Schenkel 302 geschaffen wurden. Die freien Enden der Zungen 331 sind durch eine entsprechende Verformung als eine Rastnase 3311 ausgebildet, die dazu ausgelegt ist, in eine der zugeordneten Rastöffnungen 311-1 - 311-3 im horizontalen Schenkel 302 einer in das zweite Bodenschienenelement 33, 34 eingeschobenen ersten Bodenschienenelements einzurasten. Dieser, zur Verbindung benachbarter Bodenschienenelemente dienende Rastmechanismus wir später noch genauer beschrieben.

In den horizontalen Schenkeln 302 der zweiten Bodenschienenelemente 33, 34 sind ferner Arretierungs-Aussparungen 332 vorgesehen. Diese Arretierungs-Aussparungen 332 kommen im bestimmungsgemäß weit ineinander geschobenen Zustand von zwei miteinander zu verbindenden Bodenschienenelementen, also wenn die Rastnase 3311 der Zunge 331 des zweiten Bodenschienenelements 33, 34 in eine von mehreren zugeordneten Rastöffnungen 311-1 - 311-3 des ersten Bodenschienenelements 31, 32 eingerastet ist, über einer von mehreren Arretierungs-Aussparungen 312-1 - 312-3 des ersten Bodenschienenelements 31, 32 zu liegen. Bei bestimmungsgemäß aufgebauter Photovoltaikanlage werden die übereinander zu liegen kommenden Arretierungs-Aussparungen von einem von der hohen Modulauflage 5 abgehenden Arretierungs-Fortsatz 521 durchlaufen. Dadurch werden die ineinandergesteckten ersten und zweiten Bodenschienenelemente zusätzlich gegen ein gegenseitiges Verschieben derselben gesichert.

In den ersten Bodenschienenelementen 31, 32 sind außer den vorstehend bereits erwähnten Rastöffnungen 304 in den vertikalen Schenkeln 301 und den vorstehend ebenfalls bereits erwähnten Rastöffnungen 311-1 bis 311-3 und Arretierungs-Aussparungen 312-1 bis 312-3 in den horizontalen Schenkeln 302 weitere Aussparungen 313-1 - 313-4 und Rastöffnungen 314 zur Befestigung der niedrigen Modulauflagen 4 an den ersten Bodenschienen 31, 32 vorgesehen. Hierauf wird später noch genauer eingegangen.

Ferner befinden sich auf den horizontalen Schenkeln 302 der ersten Bodenschienenelementen 31, 32 Markierungen 315-1 - 315-3, anhand welcher erkennbar ist, wie weit die ersten Bodenschienenelemente 31, 32 und die zweiten Bodenschienenelemente 33, 34 ineinander geschoben sind.

Im betrachteten Beispiel sind an den Bodenschienenelementen 31 - 34 diverse weitere Aussparungen vorgesehen. Diese dienen zur Befestigung weiterer Komponenten der Photovoltaikanlage, beispielsweise zur Befestigung von Querstreben etc. an den Bodenschienenelementen 31 - 34. Die Befestigung solcher und anderer Anlagenkomponenten an den Bodenschienenelementen ist vorliegend von untergeordnetem Interesse und wird daher hier nicht näher erläutert.

Wie sich aus dem vorstehend beschriebenen Aufbau der Bodenschienenelemente 31 - 34 bereits ergibt, sind die ersten Bodenschienenelemente 31, 32 und die zweiten Bodenschienenelemente 33, 34 zur Anbringung unterschiedlicher Modulauflagen 4, 5 ausgelegt. Im betrachteten Beispiel ist es so, dass an den ersten Bodenschienenelemente 31, 32, und zwar nur an diesen die niedrigen Modulauflagen 4 montiert werden, und dass an den zweiten Bodenschienenelemente 33, 34, und zwar nur an diesen die hohen Modulauflagen 5 montiert werden. Es dürfte einleuchten und bedarf keiner näheren Erläuterung, dass dies auch genau umgekehrt sein könnte, sodass also an den ersten Bodenschienenelementen 31, 32 die hohen Modulauflagen 5 montiert werden, und an den zweiten Bodenschienenelemente 33, 34 die niedrigen Modulauflagen 4 montiert werden. Insbesondere wenn alle Photovoltaikmodule 1 genau gleich geneigt, also beispielsweise auf die im Süden stehende Sonne ausgerichtet sind, könnte auch vorgesehen werden, auf einem Bodenschienenelement niedrige Modulauflagen 4 und hohe Modulauflagen 5 zu montieren.

Wie vorstehend bereits mehrfach erwähnt wurde, sind die ersten Bodenschienenelemente 31, 32 und die zweiten Bodenschienenelemente 33, 34 dazu ausgelegt, zur Verbindung derselben ineinander geschoben zu werden. Genauer gesagt ist es im betrachteten Beispiel so, dass die zweiten Bodenschienenelemente 33, 34 einen etwas größeren Querschnitt als die ersten Bodenschienenelemente 31, 32 aufweisen, sodass die ersten Bodenschienenelemente 31, 32 wie in den Figuren 8 bis 10 veranschaulicht in die zweiten Bodenschienenelemente 33, 34 einschiebbar sind. Selbstverständlich kann dies auch genau umgekehrt sein.

Die ersten Bodenschienenelemente 31, 32 und die zweiten Bodenschienenelemente 33, 34 werden im bestimmungsgemäß weit ineinandergeschobenen Zustand miteinander verbunden, sodass keine weiteren Relativbewegungen möglich sind. Im betrachteten Beispiel umfasst diese Verbindung eine Rastverbindung, wobei hierauf keine Einschränkung besteht. Zur Herstellung der Rastverbindung befindet sich an einem elastisch bewegbaren Abschnitt, nämlich an der Zunge 331 der zweiten Bodenschienenelemente 33, 34 die bereits erwähnte Rastnase 3311, welche bei bestimmungsgemäßer Relativlage der ineinandergeschobenen Bodenschienenelemente in eine zugeordnete Rastöffnung 311-1 - 311-3 einrastet.

Die ersten Bodenschienenelemente 31, 32 und die zweiten Bodenschienenelemente 33, 34 sind zur Anpassung an die gegebenen Verhältnisse unterschiedlich weit ineinander schiebbar. Genauer gesagt ist es so, dass es mehrere verschiedene Relativlagen gibt, in welchen sie miteinander verbunden werden können. Im betrachteten Beispiel sind die Bodenschienenelemente dazu ausgelegt, in einer von drei vorgegebenen Relativlagen miteinander verbunden zu werden, wobei auf die Zahl 3 keine Einschränkung besteht. In jeder der vorgegebenen Relativlagen können die Bodenschienenelemente auf genau die selbe Art und Weise miteinander verbunden werden.

Dies wird im betrachteten Beispiel dadurch ermöglicht, dass am ersten Bodenschienenelement 31, 32 drei mit Abstand in Reihe angeordnete Rastöffnungen 311-2, 311-2, und 311-3 vorgesehen sind, in welche die Rastnase 3311 des zweiten Bodenschienenelements 33, 34 einrasten kann.

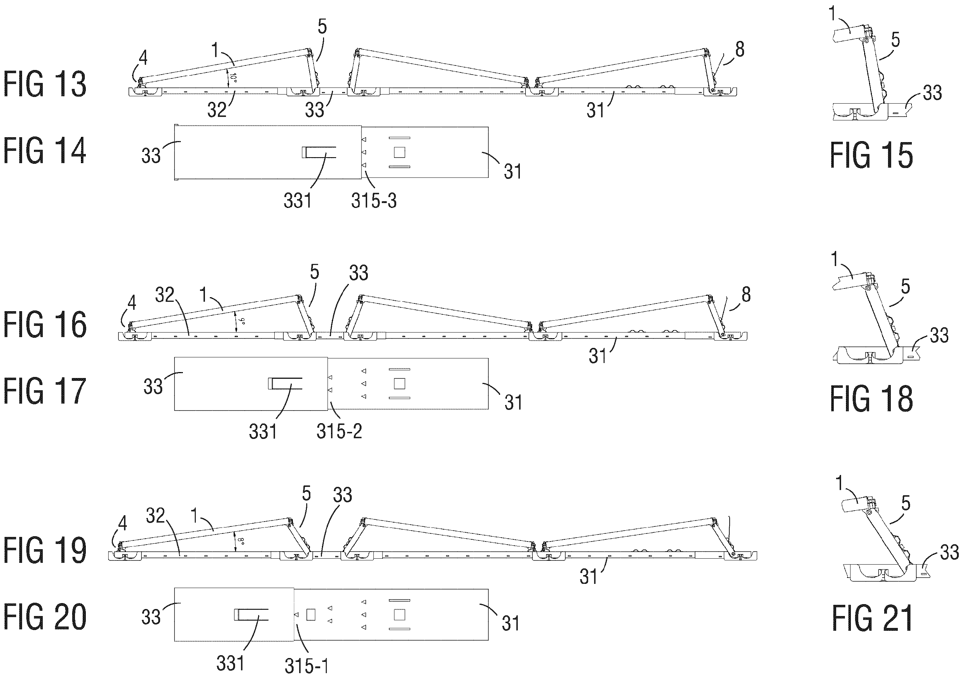

Dies und der dadurch erzielte Effekt sind in den Figuren 13 bis 21 veranschaulicht.

Die Figuren 13 bis 15 zeigen den Zustand, in welchem die ersten Bodenschienenelemente 31, 32 maximal weit in die zweiten Bodenschienenelemente 33, 34 eingeschoben sind. In diesem Zustand befindet sich die Rastnase 3311 in der Rastöffnung 311-1. Dies lässt sich von außen anhand der drei Markierungen 315-1 - bis 315-3 zuverlässig verifizieren. In maximal weit ineinander geschobenen Zustand der Bodenschienenelemente endet das zweite Bodenschienenelement 33, 34 an der Markierung 315-1. In diesem Zustand kommt ferner unter der Arretierungsaussparung 332 des zweiten Bodenschienenelements 33, 34 die Arretierungs-Aussparung 312-1 des ersten Bodenschienenelements 31, 32 zu liegen, sodass die Bodenschienenelemente mittels des diese Arretierungs-Aussparungen durchlaufenden Arretierungs-Fortsatzes 521 der hohen Modulauflage 5 in dieser Stellung arretiert werden.

Die Figuren 19 bis 21 zeigen den Zustand, in welchem die ersten Bodenschienenelemente 31, 32 minimal weit in die zweiten Bodenschienenelemente 33, 34 eingeschoben sind. In diesem Zustand befindet sich die Rastnase 3311 in der Rastöffnung 311-3, und endet das zweite Bodenschienenelement 33, 34 an der Markierung 315-3. In diesem Zustand kommt ferner unter der Arretierungs-aussparung 332 des zweiten Bodenschienenelements 33, 34 die Arretierungs-Aussparung 312-3 des ersten Bodenschienenelements 31, 32 zu liegen, sodass die Bodenschienenelemente mittels des diese Arretierungs-Aussparungen durchlaufenden Arretierungs-Fortsatzes 521 der hohen Modulauflage 5 in dieser Stellung arretiert werden.

Die Figuren 16 bis 18 zeigen den Zustand, in welchem die ersten Bodenschienenelemente 31, 32 in einem zwischen dem Minimum und dem Maximum liegenden Umfang in die zweiten Bodenschienenelemente 33, 34 eingeschoben sind. In diesem Zustand befindet sich die Rastnase 3311 in der Rastöffnung 311-2, und endet das zweite Bodenschienenelement 33, 34 an der Markierung 315-2. In diesem Zustand kommt ferner unter der Arretierungs-aussparung 332 des zweiten Bodenschienenelements 33, 34 die Arretierungs-Aussparung 312-2 des ersten Bodenschienenelements 31, 32 zu liegen, sodass die Bodenschienenelemente mittels des diese Arretierungs-Aussparungen durchlaufenden Arretierungs-Fortsatzes 521 der hohen Modulauflage 5 in dieser Stellung arretiert werden.

Wie aus den Figuren 13, 16 und 19 ersichtlich ist, hat das unterschiedlich weite Ineinanderschieben der benachbarten Bodenschienenelemente den Effekt, dass sich die Abstände zwischen den niedrigen Modulauflagen 4 und den jeweils zugehörigen hohen Modulauflagen 5 verändern. Dies hat im Zusammenwirken mit dem Umstand, dass die hohen Modulauflagen 5 wie in den Figuren 15, 18 und 21 gezeigt um eine an unteren Ende liegende, rechtwinklig zu den Bodenschienen verlaufende Achse schwenkbar sind, den positiven Effekt, dass
- sich über den Umfang des Ineinanderschiebens benachbarter Bodenschienenelemente wie in den Figuren 13, 16 und 19 gezeigt Einfluss auf die Neigung der Photovoltaikmodule 1 nehmen lässt, und/oder
- das Montagesystem über den Umfang des Ineinanderschiebens benachbarter Bodenschienenelemente an die Größe der Photovoltaikmodule, insbesondere an die Länge ihrer parallel zu den Bodenschienen verlaufenden Seite anpassbar ist.

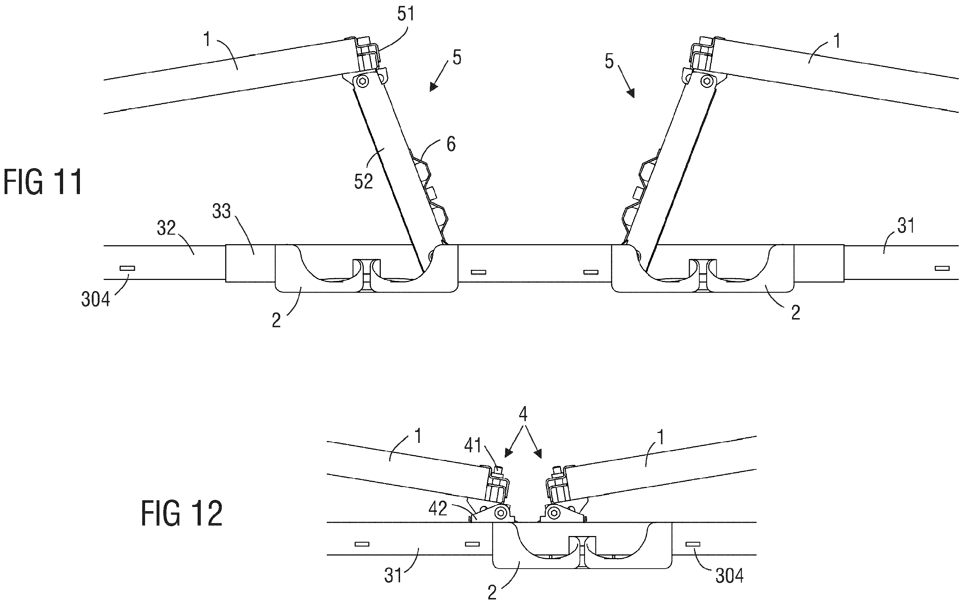

Wie erwähnt und wie beispielsweise in den Figur 11 und 12 gut erkennbar ist, sind an den ersten Bodenschienenelementen 31, 32 die niedrigen Modulauflagen 4 montiert, und sind an den zweiten Bodenschienenelementen 33, 34 die hohen Modulauflagen 5 montiert.

Sowohl für die niedrigen Modulauflagen 4 als auch für die hohen Modulauflagen 5 gilt, dass diese jeweils mit den Photovoltaikmodulen verbindbare Modulklemmen 41 bzw. 51 sowie mit den Bodenschienen und den Modulklemmen verbundene und zwischen diesen angeordnete Klemmenträger 42 bzw. 52 umfassen, die derart miteinander verbunden sind, dass die Modulklemmen in Bezug zu den Klemmenträgern und/oder die Klemmenträger in Bezug zu den Bodenschienen schwenkbar sind.

Von den genannten Komponenten der niedrigen Modulauflagen 4 sind die Modulklemmen mit dem Bezugszeichen 41, und die Klemmenträger mit dem Bezugszeichen 42 bezeichnet, und von den genannten Komponenten der hohen Modulauflagen 5 sind die Modulklemmen mit dem Bezugszeichen 51, und die Klemmenträger mit dem Bezugszeichen 52 bezeichnet.

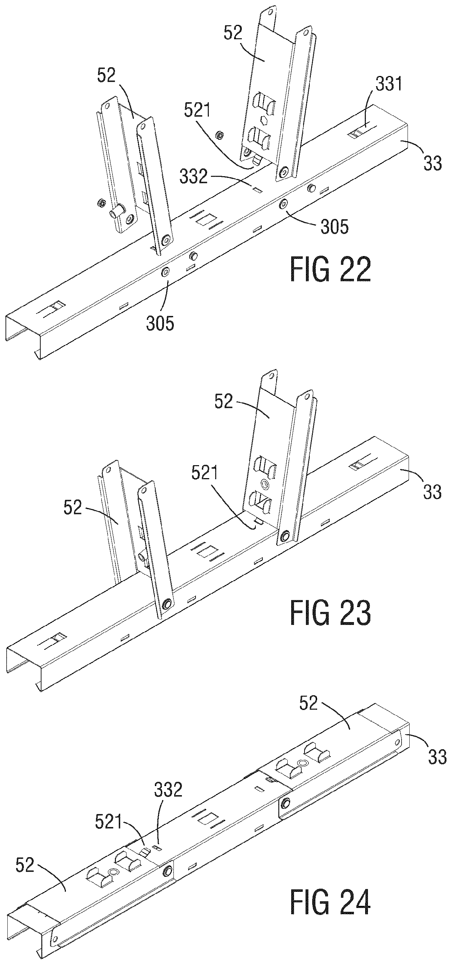

Die Montage der hohen Modulauflagen 5 an den zweiten Bodenschienenelementen 33, 34 ist in den Figuren 22 bis 27 veranschaulicht.

Der Klemmenträger 52 wird im betrachteten Beispiel durch ein Hutprofil gebildet, dessen - bezogen auf seine in der Figur 24 gezeigte, vollständig nach unten geklappte Stellung - vertikale Schenkel einen der Breite des zweiten Bodenschienenelements entsprechenden Abstand aufweisen, sodass der Klemmenträger also von oben auf das zweite Bodenschienenelement 33, 34 aufsetzbar bzw. wie in der Figur 24 gezeigt ganz nach unten klappbar ist. In den vertikalen Schenkeln des Klemmenträgers 52 sind Löcher zur Befestigung des Klemmenträgers am zweiten Bodenschienenelement 33, 34 und zur Befestigung der Modulklemme 51 am Klemmenträger vorgesehen.

Die Befestigung des Klemmenträgers 52 erfolgt durch Nieten, welche die hierfür vorgesehenen Löcher im Klemmenträger 52 sowie die in den Ausbuchtungen 305 des zweiten Bodenschienenelements 33, 34 vorgesehenen Löcher durchlaufen. Die inneren Köpfe der Nieten kommen dabei wie schon erwähnt innerhalb der Ausbuchtungen 305 zu liegen und bilden daher kein das Ineinanderschieben der Bodenschienenelemente störendes Hindernis. Die zwei einander gegenüberliegenden Nieten, durch welche jeder Klemmenträger 52 mit dem zweiten Bodenschienenelement 33, 34 verbunden ist, bilden eine senkrecht zur Bodenschiene verlaufende horizontale Schwenkachse, um welche der Klemmenträger 52 auf und abschwenkbar ist. In dem in der Figur 23 gezeigten Zustand stehen die Klemmenträger 52 fast senkrecht, und in dem in der Figur 24 gezeigten Zustand sind sie ganz nach unten geklappt und liegen auf dem zweiten Bodenschienenelement auf. Die hochgeklappte Stellung ist eine der möglichen Stellungen des Klemmenträgers 52, die dieser im bestimmungsgemäß mit einem Photovoltaikmodul 1 verbundenen Zustand einnehmen kann. Die ganz nach unten geklappte Stellung ist die Stellung des Klemmenträgers 52, die dieser, wenn er am zweiten Bodenschienenelement 33, 34 vormontiert ist, vorzugsweise während des Transports einnimmt. Der Klemmenträger 52 kann auch andere als die in der Figur 23 gezeigte hochgeklappte Stellungen einnehmen, beispielsweise, aber nicht ausschließlich die in den Figuren 15, 18 und 21 gezeigten Stellungen.

In den Figuren 22 bis 24 ist auch der vorstehend bereits erwähnte Arretierungs-Fortsatz 521 der hohen Modulauflage 5 gut erkennbar. Dieser Arretierungs-Fortsatz 521 geht im betrachteten Beispiel vom horizontalen Schenkel des Klemmenträgers 52 ab und ist so angeordnet und ausgebildet, dass er in der hochgeklappten Stellung des Klemmenträgers 52, beispielsweise in der in der Figur 23 gezeigten Stellung die Arretierungs-Aussparung 332 des zweiten Bodenschienenelements 33, 34 und die darunterliegende Arretierungsaussparung 312-1 oder 312-2 oder 312-3 des ersten Bodenschienenelements 31, 32 durchläuft und gegen Relativbewegungen derselben sichert.

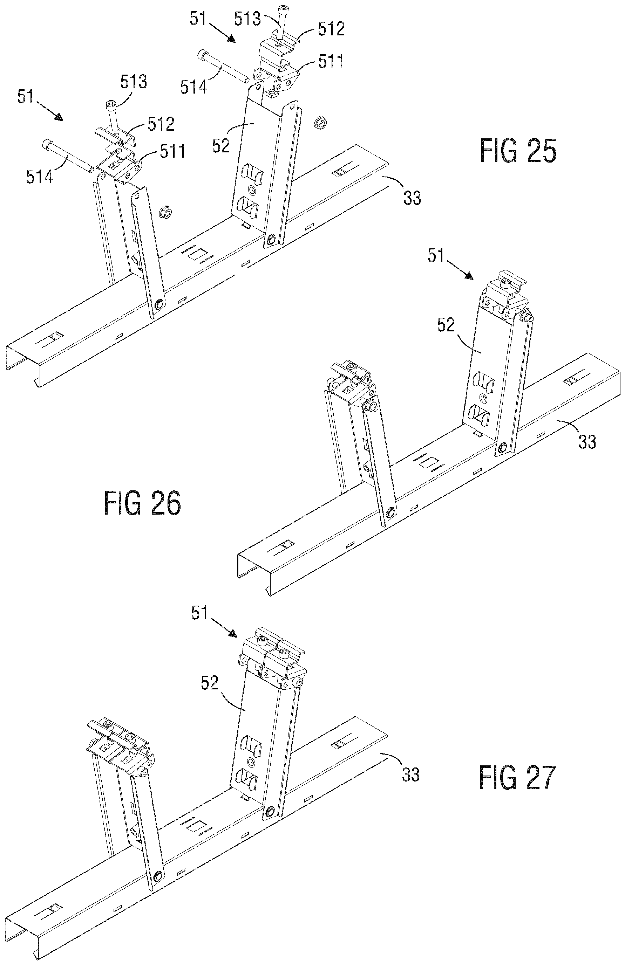

Wie insbesondere aus den Figuren 25 und 26 ersichtlich ist, umfasst die Klemme 51 ein Unterteil 511 und ein Oberteil 512, die unter Verwendung einer Schraube 513 oder dergleichen miteinander verbunden und wunschgemäß weit zueinander hin bzw. voneinander weg bewegbar sind, und zwischen welchen sich das festzuklemmende Photovoltaikmodul 1, genauer gesagt der Rahmen 11 desselben einklemmen lässt. Das Klemmen-Unterteil 511 wird durch eine Schraube 514 mit dem Klemmenträger 52 verbunden. Die Schraube 514 durchläuft die dafür vorgesehenen Löcher in den vertikalen Schenkeln des Klemmenträgers 52 sowie zugeordnete Löcher im Klemmen-Unterteil 511. Die Schraube bildet eine senkrecht zur Bodenschiene verlaufende horizontale Achse, um welche die Modulklemme 51 schwenkbar ist. Der Umstand dass nicht nur der Klemmenträger 52, sondern zusätzlich auch noch die Modulklemme 51 schwenkbar ist, macht das Montagesystem noch besser an die gegebenen Verhältnisse anpassbar als es ohnehin schon der Fall ist.

Unabhängig von alledem ist ferner noch vorgesehen, dass im Klemmen-Unterteil 511 mehrere Lochpaare zur Durchführung der Schraube 514 vorhanden sind. Dadurch kann das Klemmen-Unterteil 511 in unterschiedlichen Relativlagen am Klemmenträger 52 befestigt werden, was für eine nochmals verbesserte Anpassbarkeit des Montagesystems an die gegebenen Verhältnisse sorgt.

Wie aus der Figur 27 ersichtlich ist, kann die Modulklemme 51 auch durch ein Modulklemmenpaar gebildet werden, wobei die mehreren Modulklemmen entweder mit dem selben Photovoltaikmodul oder mit verschiedenen Photovoltaikmodulen 1 verbunden werden können.

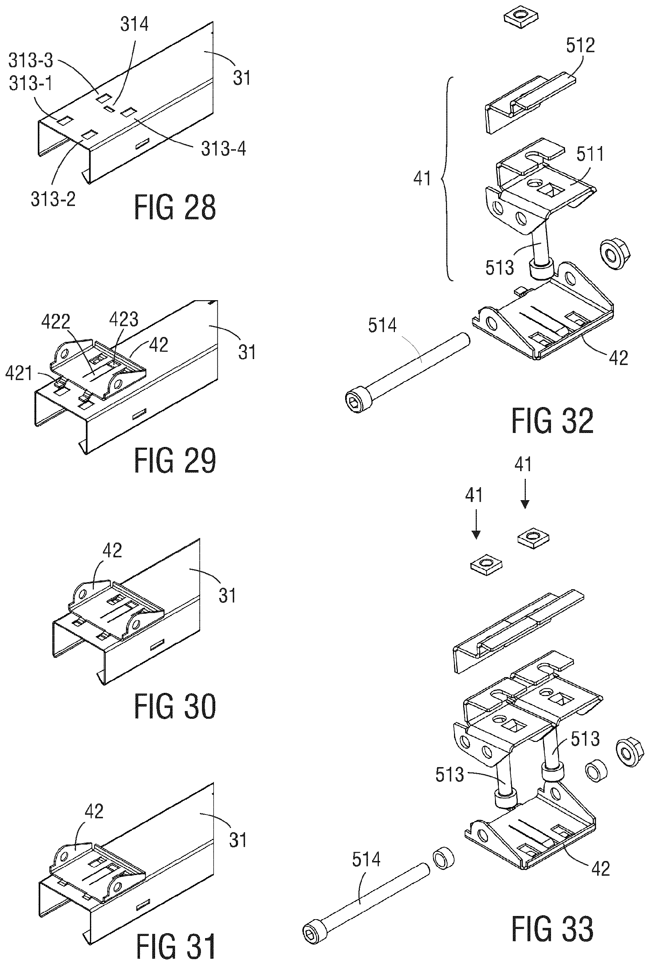

Die Montage der niedrigen Modulauflagen 4 an den ersten Bodenschienenelementen 31, 32 ist in den Figuren 28 bis 33 veranschaulicht.

Der Klemmenträger 42 wird im betrachteten Beispiel durch eine auf dem ersten Bodenschienenelement 31, 32 zu liegen kommenden Platte mit zwei in Längsrichtung der Bodenschiene verlaufenden, senkrecht nach oben ragenden Seitenteilen gebildet, in welchen Löcher zur Befestigung der Modulklemme 41 am Klemmenträger 42 vorgesehen sind. Von der Platte gehen vier abgewinkelte Beine ab, die sich von der Platte zunächst ein Stück nach unten erstrecken und dann weiter parallel zur Platte in Längsrichtung der Bodenschiene verlaufen. In der Platte ist ferner durch einen U-Förmigen Einschnitt eine elastisch bewegbare Zunge 422 gebildet, an deren freiem Ende eine Rastnase 423 ausgebildet ist.

Zur Befestigung des Klemmenträgers 42 am ersten Bodenschienenelement 31, 32 wird der Klemmenträger 42 wie in den Figuren 29 und 30 gezeigt so auf das erste Bodenschienenelement 31, 32 aufgesetzt, dass dessen Beine 421 die zugeordneten Aussparungen 313-1 - 313-4 des ersten Bodenschienenelements 31, 32 durchlaufen. Dann wird, wie in Figur 31 gezeigt der klemmenträger 42 bis zum Anschlag in Längsrichtung der Bodenschienenelements 31, 32 geschoben. In dem dann erreichten Zustand rastet die Rastnase 423 des Klemmenträgers 42 in die zugeordnete Rastöffnung 314 der ersten Bodenschienenelements 31, 32 ein und fixiert den Klemmenträger 42 in dieser Lage.

Die Figur 32 zeigt, wie die Modulklemme 41 am Klemmenträger 42 befestigt wird. Der Aufbau der Modulklemme 41 entspricht dem Aufbau der verstehend bereits beschriebenen Modulklemme 51. Gleiche Bezugszeichen bezeichnen gleiche oder einander entsprechende Elemente. Die Modulklemme wird auch wieder mit einer Schraube 514 am Klemmenträger befestigt. Die Schraube 514 durchläuft die hierfür am Klemmenträger 42 vorgesehenen Löcher sowie zugeordnete Löcher im Klemmen-Unterteil 511 und bildet auch hier eine senkrecht zur Bodenschiene verlaufende horizontale Achse, um welche die Modulklemme 41 wie die Modulklemme 51 schwenkbar ist. Durch die mehreren Löcherpaare für die Schraube 514 im Klemmen-Unterteil ist auch die Klemme 41 in unterschiedlichen Relativlagen am Klemmenträger 42 befestigbar.

Wie aus der Figur 33 ersichtlich ist, kann die Modulklemme 41 auch durch ein Modulklemmenpaar gebildet werden, wobei die mehreren Modulklemmen entweder mit dem selben Photovoltaikmodul 1 oder mit verschiedenen Photovoltaikmodulen verbunden werden können.

Die Schwenkbarkeit der Modulklemme 41 in Bezug zum Klemmenträger 42 und/oder die Möglichkeit, die Modulklemme 41 in verschiedenen Relativlagen in Bezug zum Klemmenträger 42 an diesem anbringen zu können ermöglicht weitere Anpassungen des Montagesystems an die gegebenen Verhältnisse.

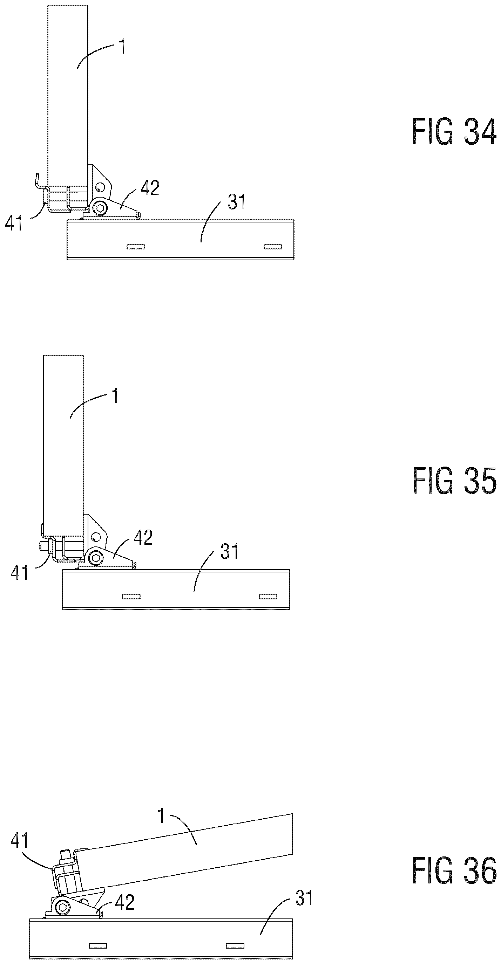

Die Schwenkbarkeit der Modulklemme 41 ermöglicht ferner eine schnellere und einfachere Montage der Photovoltaikmodule 1 am Montagesystem. Dies ist in den Figuren 34 - 36 veranschaulicht. Schwenkt man die Modulklemme 41 wie in der Figur 34 gezeigt bis zum Anschlag nach hinten, dann kann das Photovoltaikmodul 1 einfach vertikal so auf die Modulklemme gestellt werden, sodass sie, genauer gesagt deren Rahmen 11 zwischen Klemmen-Unterteil und Klemmen-Oberteil zu liegen kommt. Durch anschließendes Anziehen der das Klemmen-Unterteil und das Klemmen-Oberteil miteinander verbindenden Schraube wird der Photovoltaikmodul-Rahmen 11 wie in der Figur 35 gezeigt zwischen Klemmen-Unterteil und Klemmen-Oberteil eingeklemmt und dort gehalten. Klappt man anschließend die Modulklemme 41 zusammen mit dem von diesem eingeklemmten Photovoltaikmodul 1 nach unten, kann die gegenüberliegende Seite des Photovoltaikmoduls mit der Modulklemme 51 der hohen Modulauflage 5 verbunden werden. Dies lässt durch die Schwenkbarkeit von sowohl der Modulklemme 51 als auch des Klemmenträgers 52 ebenso schnell und einfach bewerkstelligen wie die die Verbindung der ersten Photovoltaikmodul-Seite mit der Modulklemme 41. Alle Arbeiten können problemlos von einer einzigen Person durchgeführt werden.

Das vorstehend beschriebene Montagesystem lässt sich mannigfaltig modifizieren

Insbesondere besteht keine zwingende Notwendigkeit, dass von den hier vorgestellten Möglichkeiten zur Anpassung des Montagesystems an die gegebenen Verhältnisse sämtliche Anpassungsmöglichkeiten vorgesehen werden. Es ist bereits ein Vorteil, wenn nur ein Teil der beschriebenen Anpassungsmöglichkeiten vorgesehen wird. Die hier vorgestellten Anpassungsmöglichkeiten sind unabhängig voneinander vorteilhaft einsetzbar.

Im Folgenden werden noch konkret einige weitere vorteilhafte Modifikationen des vorstehend beschriebenen Montagesystems vorgestellt und erläutert. Es sei bereits an dieser Stelle darauf hingewiesen, dass die davon betroffenen Montagesystem-Komponenten nicht nur beim vorstehend beschriebenen Montagesystem zum Einsatz kommen können, sondern - gegebenenfalls nach entsprechende Anpassung an die gegebenen Verhältnisse - auch bei beliebigen anderen Montagesystemen zur Montage von Photovoltaikmodulen. Auch besteht keine zwingende Notwenigkeit, dass in einem Montagesystem alle beschriebenen Modifikationen zum Einsatz kommen, Es erweist sich schon als vorteilhaft, wenn nur eine einzige oder eine beliebige Kombination mehrerer der nachfolgend beschriebenen Modifikationen vorgesehen wird.

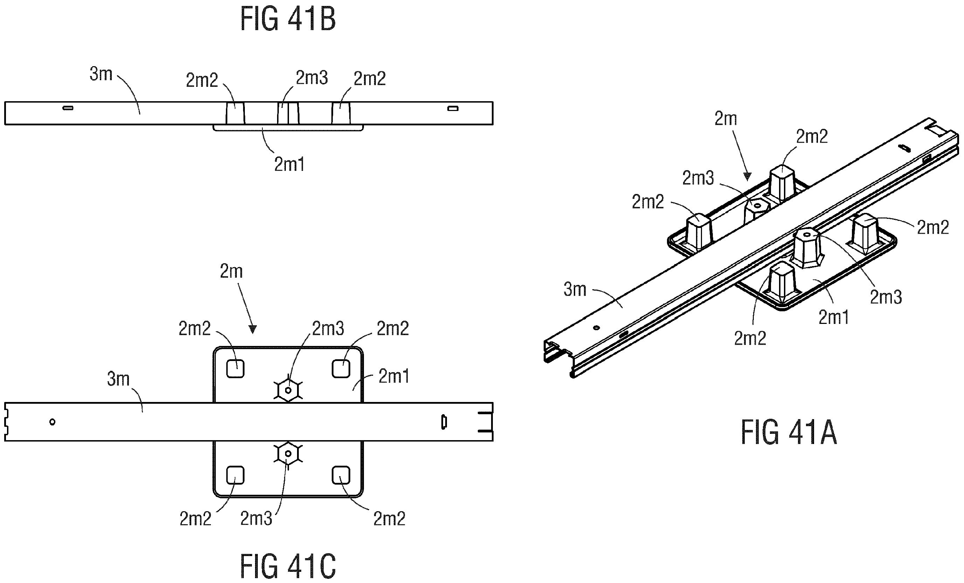

Eine erste Modifikation besteht im Vorsehen eines noch flexibler einsetzbaren Auflagetellers. Der modifizierte Auflageteller und eine bestimmungsgemäß darauf aufgesetzte Bodenschiene sind in den Figuren 41A bis 41C veranschaulicht. Der modifizierte Auflageteller ist darin mit dem Bezugszeichen 2m bezeichnet, und die darauf aufgesetzte Bodenschiene mit dem Bezugszeichen 3m.

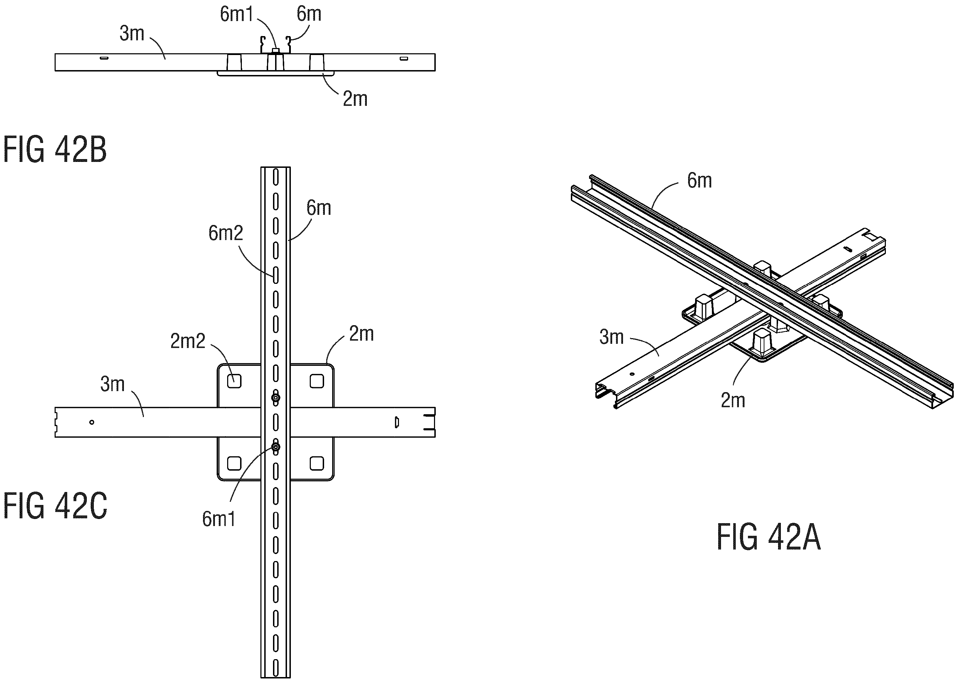

Der modifizierte Auflageteller 2m unterscheidet sich von den vorstehend bereits beschriebenen Auflagetellern 2 unter anderem, aber nicht ausschließlich, dadurch, dass er eine Befestigung von später noch genauer beschriebenen Querstreben 6m (siehe Figur 42) daran ermöglicht. Daher müssen zumindest diejenigen Auflageteller des Montagesystems, an welchen Querstreben 6m zu befestigen sind, durch die modifizierten Auflageteller 2m gebildet werden. Es können (müssen aber nicht) auch alle anderen Auflageteller, an welchen keine Querstreben 6m zu befestigen sind, durch die Auflageteller 2m gebildet werden. Der modifizierte Auflageteller 2m kann nämlich, wie in den Figuren 41A bis 41C gezeigt, auch "nur" als Auflage für die Bodenschiene 3m verwendet werden.

Der Auflageteller 2m wird im betrachteten Beispiel durch eine Platte 2m1 gebildet, von welcher mehrere säulenförmige Erhebungen senkrecht emporragen. Die besagten Erhebungen umfassen
- in jeder der vier Ecken der Platte 2m1 vorgesehene, als Ballaststein-Auflagen verwendbare erste Erhebungen 2m2,
- eine in der Mitte der Platte 2m1 vorgesehene, zur Bodenschienen-Montage dienende und unter der Bodenschiene zu liegen kommende (und daher in den Figuren nicht sichtbare) zweite Erhebung, und
- zwei auf gegenüberliegenden Seiten der zweiten Erhebung benachbart zu dieser angeordnete dritte Erhebungen 2m3, welche zur Querstreben-Montage dienen und unter der Querstrebe 6m zu liegen kommen (siehe Figur 42).

Bis auf die sich im Vergleich zu den Auflagetellern 2 unterscheidende Gestaltung der Plattenoberseite der Auflageteller 2m entsprechen die Auflageteller 2 und 2m einander, und zwar sowohl in Bezug auf den restlichen Aufbau, als auch in Bezug auf die Verwendung, als auch in Bezug auf die Funktion. Zur Vermeidung von Wiederholungen wird daher auf die entsprechenden Ausführungen zu den Auflagetellern 2 verwiesen. Diese gelten für die Auflageteller 2m entsprechend.

Wie Bodenschiene 3m wird so auf den Auflageteller 2m aufgesetzt, wie die Bodenschiene 2 auf den Auflageteller 3 aufgesetzt wird.

Das heißt, die einen im Wesentlichen C-förmigen Querschnitt, also zwei vertikale Schenkel und einen diese miteinander verbindenden horizontalen Schenkel aufweisende Bodenschiene 3m wird mit der offenen Seite voraus so auf den Auflageteller 2n aufgesetzt, dass dessen zweite Erhebung in dem zwischen der Platte 2m1 und der Bodenschiene 3m entstehenden Hohlraum zu liegen kommt und die vertikalen Schenkel der Bodenschiene in den Zwischenräumen zwischen dieser Erhebung und den diesseits und jenseits derselben vorgesehenen dritten Erhebungen 2m3 zu liegen kommen. Die in dem von den Schenkeln der Bodenschiene 3m umschlossenen Bereich zu liegen kommende zweite Erhebung kann die Bodenschiene 3m beim Aufsetzen derselben auf den Auflageteller 2m führen und Bewegungen der Bodenschiene 3m quer zu deren Längsrichtung verhindern oder zumindest einschränken.

Im bestimmungsgemäß auf dem Auflageteller 2m aufgesetzten Zustand der Bodenschiene 3m (siehe Figuren 41A bis 41C) ist die Bodenschiene bis zum Anschlag auf den Auflageteller gedrückt. In diesem Zustand
- liegen die unteren (freien) Enden der vertikalen Schenkel der Bodenschiene 3m auf der Platte 2m1 des Auflagetellers 2m auf,
- liegt der horizontale Schenkel der Bodenschiene 3m auf der Oberseite der zweiten Erhebung des Auflagetellers 2m auf, und
- sind die Bodenschiene 3m und der Auflageteller 2m durch eine während des Aufsteckens einrastende Rastverbindung miteinander verbunden.

Für die besagte Rastverbindung sind an den den vertikalen Schenkeln der Bodenschiene 3m zugewandten Seiten der zweiten Erhebung und/oder der dritten Erhebungen 2m3 in den Figuren nicht gezeigte Rastnasen vorgesehen, die in zugeordnete Rastöffnungen in den vertikalen Schenkeln, genauer gesagt in den Rastöffnungen 304 der Bodenschiene 3 entsprechende Rastöffnungen der Bodenschiene 3m einrasten.

Vorzugsweise ist die Ausdehnung der besagten Rastöffnung in Längsrichtung der Bodenschiene 3m größer als die Ausdehnung der erwähnten Rastnasen des Auflagetellers 2m in dieser Richtung. Dadurch ist es möglich, dass sich die Bodenschiene 3m relativ zum Auflageteller 2m in Längsrichtung der Bodenschiene 3m bewegen kann. Dies hat den positiven Effekt, dass durch Temperaturschwankungen verursachte Veränderungen der Länge der Bodenschiene 3m möglich sind, ohne den Auflageteller 2m auf dem Dach zu verschieben. Wie später noch besser verstanden werden wird, gilt dies jedoch nur bei Auflagetellern 2m, an welchen keine Querstrebe 6m befestigt ist und kein Niederdrücken der Bodenschiene 3m durch die Querstrebe erfolgt.

Die Rastverbindungen verhindern jedoch, dass sich die Bodenschiene 3m vertikal in Bezug zum Auflageteller 2m bewegen kann.

Da, wie vorstehend bereits erwähnt, die vertikalen Schenkel der Bodenschiene 3m in den Zwischenräumen zwischen der zweiten Erhebung des Auflagetellers 2m und den diesseits und jenseits derselben vorgesehenen dritten Erhebungen 2m3 zu liegen kommen, können durch diese bei geeigneter Anordnung derselben auch Bewegungen der Bodenschiene quer zu deren Längsrichtung verhindert werden.

Bewegungen der Bodenschiene 3m in vertikaler Richtung und quer zur Längsrichtung der Bodenschiene können allenfalls in vernachlässigbarem Umfang erfolgen.

Der Auflageteller 2m und die Bodenschiene 3m sind im betrachteten Beispiel so aneinander angepasst, dass die am weitesten nach oben ragenden Abschnitte des Auflagetellers 2m, also die ersten Erhebungen 2m2 und die dritten Erhebungen 2m3 bündig mit der Oberseite der bestimmungsgemäß auf den Auflageteller 2m aufgesetzten Bodenschiene 3m abschließen. Dies ermöglicht es unter anderem, dass der Auflageteller 2m als eine zusätzliche Auflage für auf die Bodenschiene 3 aufzulegende Gegenstände verwendet werden. Solche Gegenstände sind beispielsweise, aber nicht ausschließlich die bereits erwähnten Ballaststeine 7. Diesbezüglich besteht kein Unterschied zum vorstehend näher beschriebenen Auflageteller 2. Zur Vermeidung von Wiederholungen wird diesbezüglich daher ergänzend auf die dortigen Erläuterungen verwiesen. Diese gelten für die Auflageteller 2m entsprechend.

Die bereits mehrfach erwähnten Querstreben 6m und deren Anordnung und Einbau in das Montagesystem sind in den Figuren 42A bis 42C veranschaulicht.

Die erwähnten Querstreben 6m weisen im betrachteten Beispieleinen im Wesentlichen C-förmigen Querschnitt auf, mit zwei vertikalen Schenkeln und einem diese miteinander verbindenden horizontalen Schenkel, wobei im horizontalen Schenkel Löcher 6m2 zum Durchstecken von Schrauben 6m1 zur Befestigung der Querstreben am Auflageteller 2m vorgesehen sind. Genauer gesagt handelt es sich um eine sich in Längsrichtung der Querstrebe 6m erstreckende Reihe von mit geringem Abstand aufeinanderfolgenden Langlöchern 6m2, deren Längsrichtung mit der Längsrichtung der Querstrebe 6m zusammenfällt. Selbstverständlich kann in der Querstrebe 6m auch ein anderes Lochmuster zum Durchstecken der Schrauben 6m1 vorgesehen werden.

Die Querstrebe 6m wird so am Auflageteller 2m angebracht, dass der horizontale Schenkel der Querstrebe auf den Oberseiten der dritten Erhebungen 2m3 des Auflagetellers 2m aufliegt und sich die vertikalen Schenkel nach oben, das heißt weg vom Auflageteller 2m erstrecken. Wie insbesondere aus Figur 42B ersichtlich ist, ist es dadurch automatisch so, dass die Querstrebe 6m, genauer gesagt deren unten liegender horizontaler Schenkel auch auf der Bodenschiene 3m, genauer gesagt auf deren oben liegenden horizontalen Schenkel zu liegen kommt und die Bodenschiene 3m zwischen dem Auflageteller 2m und der Querstrebe 6m eingeklemmt ist. Dies hat den Effekt, dass sich bei Auflagetellern an die wie in den Figuren 42A bis 42C gezeigt eine Querstrebe angeschraubt ist, die Querstrebe 6m und die Bodenschiene 3m weder relativ zueinander noch relativ zum Auflageteller 2m -bewegen können. Zur Vermeidung von Missverständnissen sei hierzu angemerkt, dass im Normalfall bei weitem nicht alle Auflageteller 2m über Querstreben 6m miteinander verbunden sein werden. Querstreben 6m dürften nur dort vorgesehen werden, wo es wirklich nötig ist, also nur in Montagesystem-Bereichen, in welchen mit der Einwirkung besonders großer Kräfte auf das Montagesystem zu rechnen ist.

Die Querstrebe 6m wird an beiden dritten Erhebungen 2m3 angeschraubt. Hierfür weisen die dritten Erhebungen 2m3 an ihren Oberseiten Löcher auf, in welche die durch die darüber liegenden Langlöcher 6m2 durchgesteckten Schrauben 6m1 eindrehbar sind. Die besagten Löcher in den Erhebungen 2m3 weisen entweder ein Innengewinde auf, oder sind so ausbildet, dass eine darin eingedrehte Schraube selbst ein Gewinde einschneiden kann. Letzteres kann beispielsweise durch Vorsehen axialer Rippen an der das Loch seitlich begrenzenden Innenwand erreicht werden. Das Loch könnte auch so ausgebildet werden, dass darin eine Mutter einsetzbar ist, wobei das Anschrauben der Querstrebe 6m am Auflageteller 2m dann durch Eindrehen der Schraube in die Mutter erfolgen kann.

Prinzipiell könnten die Querstreben zusätzlich oder alternativ aber auch an den Bodenschienen 3m befestigt werden.

Im betrachteten Beispiel verlaufen die Querstreben 6m quer, das heißt in einem Winkel von 90° zu den Bodenschienen 3m. Hierfür besteht keine zwingende Notwendigkeit. Prinzipiell könnten die Querstreben auch so angeordnet werden, dass sie in einem anderen Winkel, also schräg zu den Bodenschienen verlaufen. Und es müssen auch nicht alle Querstreben parallel zueinander verlaufen.

Unabhängig hiervon sind die Querstreben 6m jeweils an mindestens zwei Auflagetellern, die mit verschiedenen, beispielsweise mit quer zur Bodenschienen-Längsrichtung benachbarten Bodenschienen verbunden sind, befestigt.. Obgleich die Querstreben nicht auch mit den Bodenschienen verschraubt sind, bewirken sie dennoch eine Kopplung zwischen ausgewählten Bodenschienen der vorhandenen Bodenschienen-Reihe. Die Querstreben können daher auch als Reihenkoppler des Montagesystems angesehen werden.

Bei Bedarf können die Querstreben der Länge nach aus mehreren Querstreben-Elementen zusammengesetzt sein. Beispielsweise kann vorgesehen werden, dass die Querstreben-Elemente nur so lang sind, dass über sie nur zwei miteinander zu verbindende benachbarte Auflageteller verbindbar sind, genauer gesagt sie an einem ersten Auflageteller beginnen und an einem zweiten Auflageteller enden. Dann könnte der erster Auflageteller über ein erstes Querstreben-Element mit dem zweiten Auflageteller, der zweite Auflageteller über ein zweites Querstreben-Element mit einem dritten Auflageteller verbunden werden, usw.. Da jeder Auflageteller 2m zwei dritte Erhebungen 2m3 zum Anschrauben von Querstreben aufweist, können an einem Auflageteller wahlweise zwei Querstreben mit jeweils einer Schraube, oder eine einzige Querstrebe mit zwei Schrauben angeschraubt werden. Alternativ können die Querstreben auch verlängert werden, indem zwei Querstreben-Elemente miteinander verbunden, beispielsweise miteinander verschraubt werden.

Es dürfte einleuchten und bedarf keiner näheren Erläuterung, dass auch die Ausbildung der Querstreben 6m, deren Anordnung innerhalb des Montagesystems, deren Anzahl, und/oder deren Befestigung an den Auflagetellern 2m beliebig veränderbar / anpassbar sind.

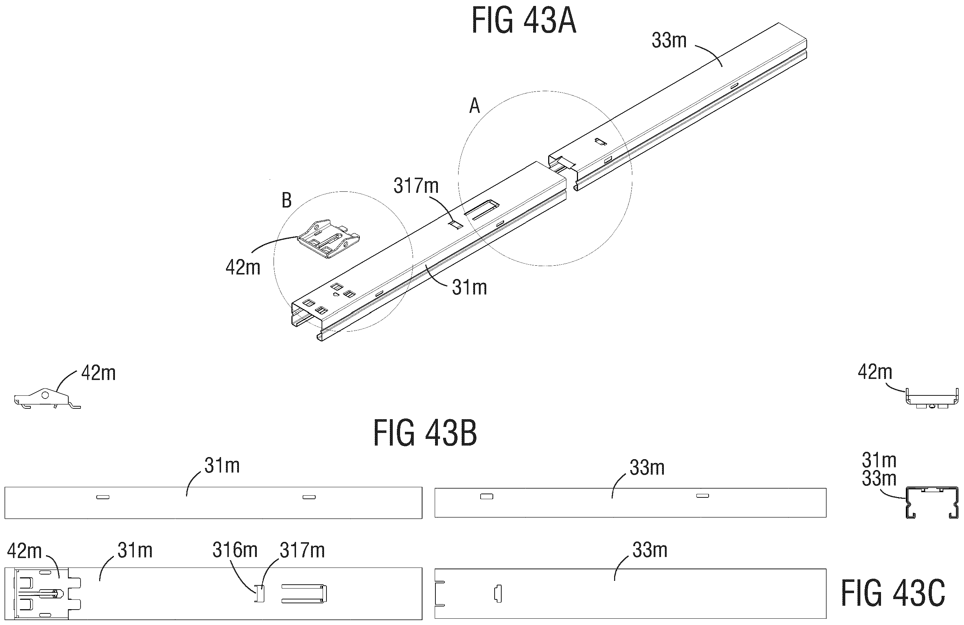

Eine zweite Modifikation des unter Bezugnahme auf die Figuren 1 bis 40 beschriebenen Montagesystems betrifft die darin zum Einsatz kommenden Rastverbindungen. Genauer gesagt geht es vorliegend insbesondere um eine Modifikation der Rastverbindungen zwischen dem Klemmenträger 42 und dem ersten Bodenschienenelement 31 (oder 32) sowie zwischen dem ersten Bodenschienenelement 31 (oder 32) und dem zweiten Bodenschienenelement 33 (oder 34). Die modifizierten Rastverbindungen hierfür sind in den Figuren 43A bis 43C im Überblick gezeigt. Es sei jedoch bereits an dieser Stelle darauf hingewiesen, dass sich die im Folgenden näher beschriebenen modifizierten Rastverbindungen zumindest nach Anpassung an die gegebenen Verhältnisse auch zur Verbindung anderer Komponenten in Montagesystemen oder sonstigen Systemen verwenden lassen.

An den genannten Rastverbindungen wurden sowohl die Rastnasen als auch die Rastöffnungen modifiziert. Der entsprechend modifizierte Klemmenträger ist in den Figuren mit dem Bezugszeichen 42m bezeichnet, das entsprechend modifizierte erste Bodenschienenelement mit dem Bezugszeichen 31m, und das entsprechend modifizierte zweite Bodenschienenelement mit dem Bezugszeichen 33m.

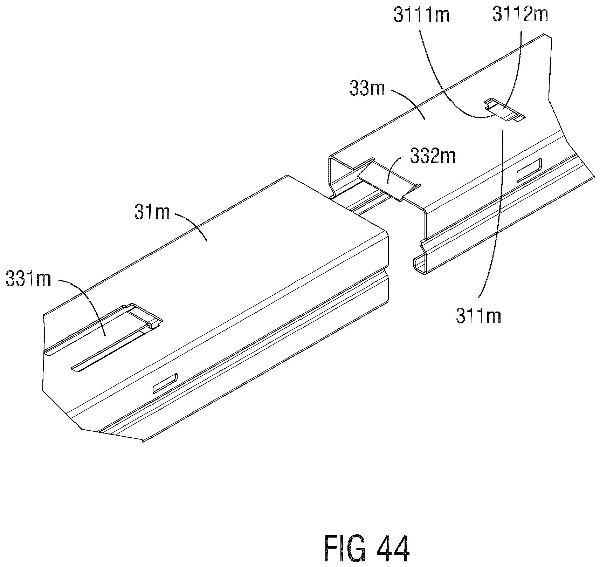

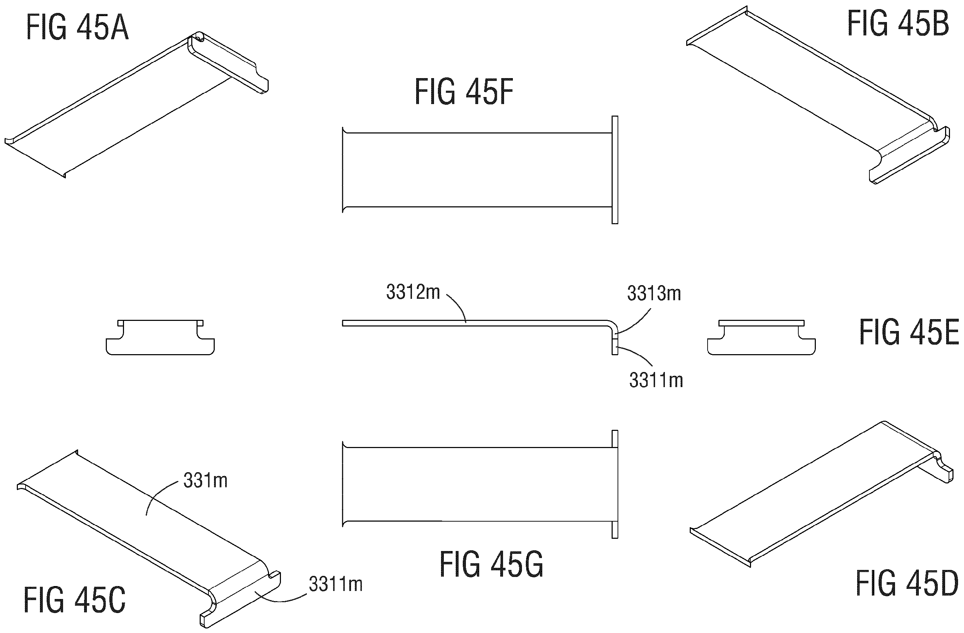

Der in der Figur 43A mit A bezeichnete Bereich, welcher die modifizierte Rastnase und die modifizierte Rastöffnung für die Rastverbindung zwischen den beiden Bodenschienenelementen 31m, 33m enthält, ist in der Figur 44 vergrößert dargestellt. Die modifizierte Rastnase wird durch das vordere Ende einer der Zunge 331 entsprechenden, elastisch bewegbaren Zunge 331m gebildet, die im horizontalen Schenkel des ersten Bodenschienenelements 31m ausgebildet ist. Da die Figur 44 nicht alle Details der Zunge 331m zeigt, ist diese zusammen mit der daran ausgebildeten modifizierten Rastnase 3311m in den Figuren 45A bis 45G in verschiedene Ansichten nochmals allein, d.h. ohne den Rest des ersten Bodenschienenelements 31m gezeigt. Die der Rastnase 3311m zugeordnete, im horizontalen Schenkel des zweiten Bodenschienenelements 33m ausgebildete Rastöffnung ist in der Figur 44 am besten zu erkennen und dort mit dem Bezugszeichen 311m bezeichnet.

Die Rastöffnung 311m ist T-förmig ausgebildet. Genauer gesagt weist sie einen beim Ineinanderschieben der Bodenschienenelemente 31, 33 zuerst von der Rastnase überlaufenen hinteren Rastöffnungs-Abschnitt 3111m, und einen sich an diesen anschließenden, eine größere Breite aufweisenden vorderen Rastöffnungs-Abschnitt 3112m auf.

Die, wie erwähnt am vorderen Ende der Zunge 331m vorgesehene Rastnase 3311m weist eine Breite auf, die größer als die Breite des schmäleren hinteren Rastöffnungs-Abschnittes 3111m, aber kleiner als die Breite des breiteren vorderen Rastöffnungs-Abschnittes ist.

Die die Rastnase 3311m aufweisende Zunge 331m weist eine geringere Breite auf als die Rastnase. Genauer gesagt ist die Breite der Zunge 331m eine eine Breite auf, die kleiner als die Breite des schmäleren hinteren Rastöffnungs-Abschnittes 3111m ist. Im betrachteten Beispiel gilt dies für sie komplette Zunge 331m. Es reicht jedoch aus, wenn nur der sich unmittelbar an die Rastnase 3311 anschließende Teil der Zunge diese Breite aufweist.

Die Zunge 331m ist abgewinkelt und dadurch in einen horizontalen Abschnitt 3312m und einen abgewinkelten Abschnitt 3313m untergliedert ist. Der Winkel zwischen dem horizontalen Zungenabschnitt 3312m und dem abgewinkelten Zungenabschnitt 3313m beträgt im betrachteten Beispiel 90°, könnte aber auch etwas größer oder kleiner sein.

Um den Zusammenbau der Bodenschienenelemente 31, 33 zu erleichtern, ist an der dem ersten Bodenschienenelement 31 zugewandten Seite des Bodenschienenelements ein Teil des horizontalen Schenkels zur Ausbildung einer Rampe 332m für die Rastnase 3311m nach unten gebogen.

Um die Bodenschienenelemente 31, 33 über die dafür vorgesehene Rastverbindung in Verbindung zu bringen, müssen die Bodenschienenelemente 31, 33 ineinander geschoben werden, wobei das zweite Bodenschienenelement 33 das innen zu liegen kommende Bodenschienenelement ist. Beim Ineinanderschieben trifft irgendwann die Rastnase 3311m auf die Rampe 332m und gleitet über diese auf die Oberseite des horizontalen Schenkels des zweiten Bodenschienenelements 33. Einhergehend damit wird die Zunge 331m elastisch nach oben gedrückt. Wenn bei weiterem Ineinanderschieben der Bodenschienenelemente 31, 33 die Rastnase 3311m die Rastöffnung 311m im horizontalen Schenkel des zweiten Bodenschienenelements erreicht, passiert zunächst nichts. Die Rastnase 3311m gleitet über den schmäleren hinteren Rastöffnungs-Abschnitt 3111m hinweg. Wenn die Rastnase über dem sich daran anschließenden vorderen Rastöffnngs-Abschnitt 3112m zu liegen kommt, wird sie durch die Zunge in diesen hineingedrückt und rastet dabei dort ein. Der abgewinkelte Abschnitt der Zunge 331m ist so ausgebildet, dass die Rastnase 3311m so weit in die Rastöffnung hineinbewegt wird, dass sie unterhalb der Unterseite des horizontalen Schenkels des zweiten Bodenschienenelements 33 zu liegen kommt. Bewegen sich die Bodenschienenelemente 31, 33 - aus welchem Grund auch immer - wieder auseinander, gelangt der abgewinkelte Zungenabschnitt in den hinteren Rastöffnungs-Abschnitt und schlägt an dessen hinterem Ende an. Da sich die Rastnase 3311m nach wie vor unterhalb der Unterseite des horizontalen Schenkels des zweiten Bodenschienenelements 33 befindet, kann er die Rastöffnung selbst bei weiterem Auseinanderziehen der Bodenschienenelemente 31, 33 nicht verlassen, weil der hintere Rastöffnungs-Abschnitt 3111m, unter welchem sich die Rastnase befindet, schmäler als die Rastnase ist. Damit ist es durch die besondere Ausbildung der Rastnase und der zugeordneten Rastöffnung ausgeschlossen, dass die Rastverbindung unbeabsichtigt gelöst wird.

Um zu verhindern, dass die Bodenschienenelemente 31m, 33m - aus welchem Grund auch immer - weiter ineinander geschoben werden als es für die Herstellung der Rastverbindung erforderlich ist, weist der horizontale Schenkel des ersten Bodenschienenelements 31m an seiner Unterseite einen Anschlag auf, der so angeordnet und bemessen ist, dass er dann, wenn die Rastnase 3311m über dem vorderen Rastöffnungs-Abschnitt 3112m zu liegen kommt, an dem dem ersten Bodenschienenelement 31m zugewandten Ende der am zweiten Bodenschienenelement 33m vorgesehenen Rampe 332m anschlägt und damit ein weiteres Ineinanderschieben der Bodenschienenelemente 31m, 33m verhindert. Beim Anschlagen des Anschlages an der Rampe 332m sind die Bodenschienenelemente 31m, 33m genau so weit ineinander geschoben wie es zum Einrasten der Rastnase 3311m in den hinteren Rastöffnungs-Abschnitt 3312m erforderlich ist. Ein weiteres Ineinanderschieben ist unnötig und aus Gründen der Verbindungssicherheit unerwünscht. Der besagte Anschlag wird im betrachteten Beispiel dadurch geschaffen, dass durch einen U-förmigen Einschnitt in den horizontalen Schenkel des ersten Bodenschienenelements 31m eine Zunge gebildet wird, und diese Zunge dann um 90° nach unten gebogen wird. Die Zunge ist in den Figuren 43A bis 43C mit dem Bezugszeichen 316m bezeichnet; die im horizontalen Schenkel des ersten Bodenschienenelements 31m vorhandene Öffnung, die durch das Nachuntenbiegen der aus dem horizontalen Schenkel ausgeschnittenen Zunge entstanden ist, ist mit dem Bezugszeichen 317m bezeichnet. Der Anschlag kann selbstverständlich auch auf beliebige andere Art und Weise hergestellt werden.

Die modifizierte Rastverbindung zwischen dem Klemmenträger 42 und dem ersten Bodenschienenelement 31 (oder 32), genauer gesagt die modifizierte Rastnase und die modifizierte Rastöffnung für diese Rastverbindung sind in der Figur 43A in dem mit B bezeichneten Bereich gezeigt.

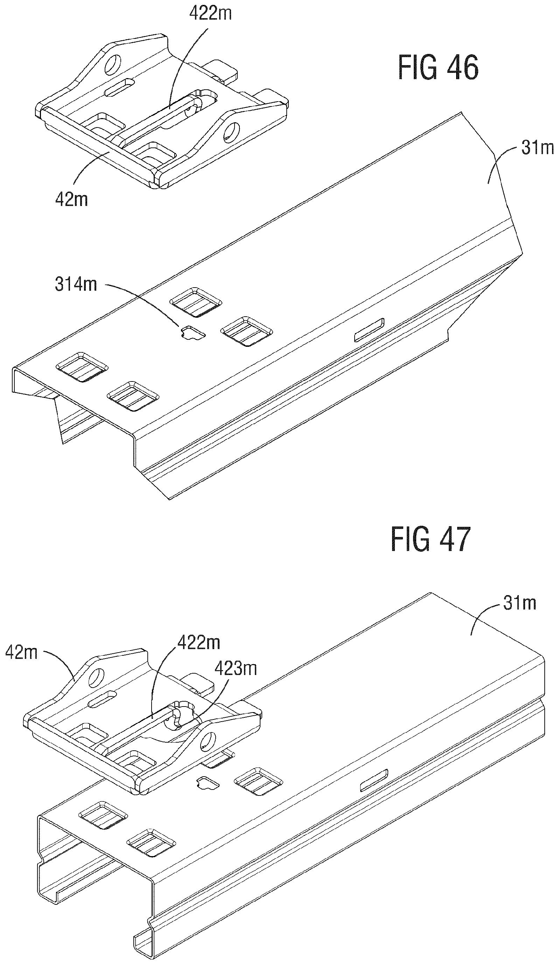

Dieser Bereich B ist in der Figur 46 vergrößert, und in der Figur 47 ohne die Rastnase verdeckende Klemmenträger-Abschnitte dargestellt.

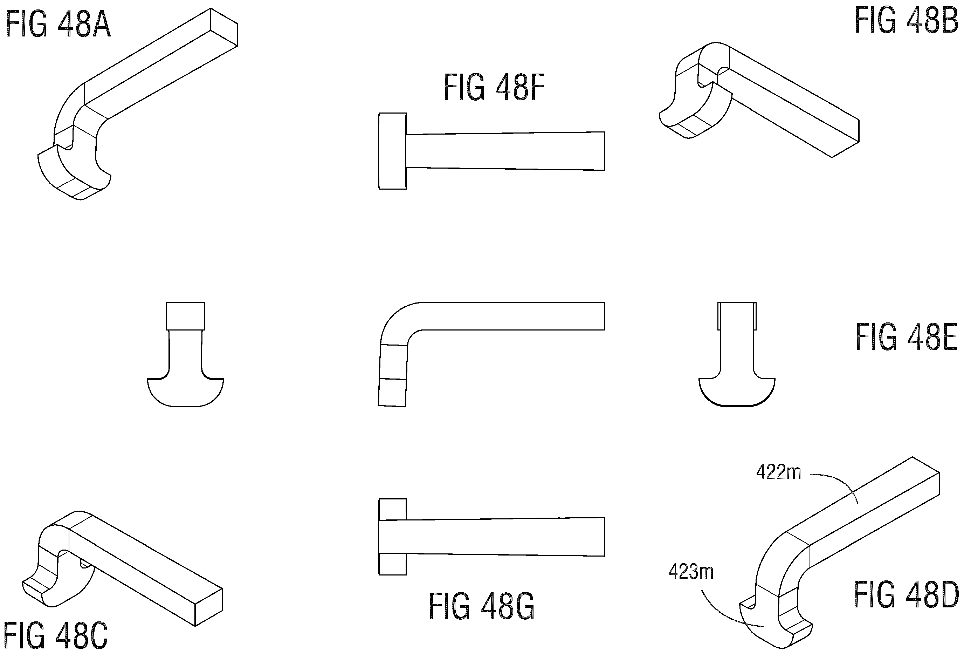

Die modifizierte Rastnase wird durch das vordere Ende einer der Zunge 422 entsprechenden, elastisch bewegbaren modifizierten Zunge 422m gebildet, die im Boden des modifizierten Klemmenträgers 42m ausgebildet ist. Die Zunge 422m mit der daran ausgebildeten modifizierten Rastnase 423m ist in den Figuren 48A bis 48G in verschiedene Ansichten nochmals allein, d.h. ohne den Rest des Klemmenträgers 42m gezeigt. Die der Rastnase 423m zugeordnete, im horizontalen Schenkel des ersten Bodenschienenelements 32m ausgebildete Rastöffnung ist in der Figur 46 am besten zu erkennen und dort mit dem Bezugszeichen 314m bezeichnet.

Die Rastöffnung 314m entspricht der vorstehend bereits beschriebenen Rastöffnung 311m im horizontalen Schenkel des ersten Bodenschienenelements 31. Zur Vermeidung von Wiederholungen wird daher auf vorstehenden Ausführungen zur Rastöffnung 311m verwiesen. Diese gelten für die Rastöffnung 314m entsprechend.

Und die Zunge 422m und die an deren vorderen Ende vorgesehene Rastnase 423m entsprechen im Wesentlichen der vorstehend bereits beschriebenen Zunge 331m und der an deren vorderen Ende vorgesehenen Rastnase 3311. Die einzigen Unterschiede bestehen darin, dass der horizontale Zungenabschnitt der Zunge 422m nach oben versetzt ist, also oberhalb des Klemmenträgerbodens verläuft, und der vertikale Zungenabschnitt entsprechend länger ist. Zur Vermeidung von Wiederholungen wird daher auf vorstehenden Ausführungen zur Zunge 422 und der daran vorgesehenen Rastnase 423m verwiesen. Diese gelten für die Zunge 331m und die daran vorgesehene Rastnase 3311 entsprechend.

Die genannten Unterschiede sind einzig und allein dem Umstand geschuldet, dass die Zunge 422m und die daran vorgesehene Rastnase 423m eine wesentlich größere Materialstärke aufweisen als die Zunge 331m und die daran vorgesehene Rastnase 3311. Durch das Vorsehen der genannten Unterschiede wird verhindert, dass die dickere Zunge 422 durch die bei der Herstellung der Rastverbindung erfolgenden Zungenbewegungen dauerhaft, also nicht nur elastisch verformt wird. Die genannten Unterschiede haben jedoch keinen Einfluss auf die Herstellung der Rastverbindung, die Funktion und die Wirkungsweise. Diesbezüglich gilt für die Zunge 422m und die daran vorgesehene Rastnase 423m das zur Zunge 331m und der daran vorgesehenen Rastnase 3311 Gesagte.

Eine weitere Modifikation des vorstehend unter Bezugnahme auf die Figuren 1 bis 40 beschriebenen Montagesystems betrifft eine Erhöhung der Belastbarkeit der Rastöffnungen 311m und 314m. Diese sind durch Vorsehen eines die jeweiligen Rastöffnungen entlang des Randes umlaufenden Durchzuges verstärkt. Ein solcher Durchzug ist beispielsweise durch Tiefziehen oder Kragenziehen herstellbar Hierbei wird zunächst ein Loch erzeugt, dessen Form der Form der herzustellenden Rastöffnung entspricht, dessen Größe aber geringer ist als die Größe der herzustellenden Rastöffnung, und anschließend wird das noch zu kleine Loch durch Hindurchdrüchen eines größere Abmessungen aufweisenden Stempels aufgeweitet, wobei der Randbereich des ursprünglich zu kleinen Loches nach unten gedrückt wird und den Durchzug bildet.

Die vorstehend beschriebenen Modifikationen haben den positiven Effekt, dass die Montagesystem-Komponenten größere Kräfte aufnehmen können, ohne durch diese beschädigt oder voneinander getrennt zu werden. Umgekehrt ist es dadurch möglich, das Montagesystem aus Komponenten aufzubauen, die eine geringere mechanische Belastbarkeit aufweisen. Beispielsweise können anstatt der bisher verwendeten dickwandigen Aluminiumprofile dünnwandige Stahlprofile verwendet werden.

Das vorstehend beschriebene Montagesystem erweist sich unabhängig von den Einzelheiten der praktischen Realisierung in mehrfacher Hinsicht als sehr vorteilhaft. Es ist schnell und einfach individuell an die jeweils gegebenen Verhältnisse anpassbar.

### Bezugszeichenliste

- 1: Photovoltaikmodul
- 2: Auflageteller
- 2m: Auflageteller
- 3: Bodenschiene
- 3m: Bodenschiene
- 4: niedrige Modulauflage
- 5: hohe Modulauflage
- 6: Querstrebe
- 6m: Querstrebe
- 7: Ballaststein
- 8: Windschutzblech

- 11: Rahmen von 1

- 21, 22: an 2 ausgebildete vertikale Flächen, zwischen welchen 3 einsetzbar ist

- 23, 24: an 2 ausgebildete zweite vertikale Flächen, zwischen welchen 3 einsetzbar ist

- 2m1: Platte von 2m
- 2m2: erste säulenförmige Erhebung auf 2m1
- 2m3: dritte säulenförmige Erhebung auf 2m1

- 31, 32: erstes Bodenschienenelement
- 33, 34: zweites Bodenschienenelement

- 31m: modifiziertes erstes Bodenschienenelement
- 33m: modifiziertes zweites Bodenschienenelement

- 41: Modulklemme von 4
- 42: Klemmenträger von 4

- 42m: modifizierter Klemmenträger

- 51: Modulklemme von 5
- 52: Klemmenträger von 5

- 6m1: Schraube zum Anschrauben von 6m an 2m3
- 6m2: Langloch in 6m

- 211: Rastnase an 21 und 22

- 301: vertikaler Schenkel von 31 -34
- 302: horizontaler Schenkel von 31 - 34
- 303: nach innen gebogenes unteres Ende von 301
- 304: 211 zugeordnete Rastöffnung in 301 von 31 - 34
- 305: Ausbuchtung nach außen in 301 von 33, 34

- 311-1: 3311 zugeordnete Rastöffnung in 302 von 31, 32
- 311-2: 3311 zugeordnete Rastöffnung in 302 von 31, 32
- 311-3: 3311 zugeordnete Rastöffnung in 302 von 31, 32

- 311m: 3311m zugeordnete Rastöffnung im horizontalen Schenkel von 33m

- 312-1: 332 zugeordnete Arretierungs-Aussparung in 302 von 31, 32
- 312-2: 332 zugeordnete Arretierungs-Aussparung in 302 von 31, 32
- 312-3: 332 zugeordnete Arretierungs-Aussparung in 302 von 31, 32
- 313-1: Aussparung in 302 von 31, 32 zur Befestigung von 4 an 31, 32
- 313-2: Aussparung in 302 von 31, 32 zur Befestigung von 4 an 31, 32
- 313-3: Aussparung in 302 von 31, 32 zur Befestigung von 4 an 31, 32
- 313-4: Aussparung in 302 von 31, 32 zur Befestigung von 4 an 31, 32
- 314: 423 zugeordnete Rastöffnung in 302 von 31, 32
- 315-1: Markierung auf 302 von 31, 32
- 315-2: Markierung auf 302 von 31, 32
- 315-3: Markierung auf 302 von 31, 32

- 316m: an 332m anschlagender Anschlag
- 317m: Öffnung in 31m, die durch das Nachuntenbiegen einer nun 316m bildenden Zunge in 31m entstanden ist

- 331: elastisch bewegbare Zunge in 302 von 33, 34
- 332: Arretierungs-Aussparung in 302 von 33, 34

- 331m: modifizierte Zunge in horizontalem Schenkel von 31m
- 332m: am horizontalen Schenkel von 33m ausgebildete Rampe für 3311

- 421: Beine von 42
- 422: Zunge in 42
- 423: Rastnase an 422

- 422m: modifizierte Zunge im Boden von 42m
- 423m: Rastnase an 422m

- 511: Unterteil von 51
- 512: oberes Klemmenelement
- 513: Schraube zur Verbindung und Verstellung von 511, 512

- 521: Arretierungs-Fortsatz an 52

- 3111m: schmälerer hinterer Abschnitt von 311m
- 3112m: breiterer vorderer Abschnitt von 311m

- 3311: Rastnase an 331

- 3311m: modifizierte Rastnase an 331m
- 3312m: horizontalen Abschnitt von 331m
- 3313m: abgewinkelter Abschnitt 331m

- Rx: Photovoltaikmodulfeld-Reihe
- Sx: Photovoltaikmodulfeld-Spalte

- O: Osten
- W: Westen

## Patentansprüche

1. Montagesystem zur Montage von Photovoltaikmodulen (1) auf Dächern, insbesondere auf Flachdächern, mit
- über dem Dach anzuordnenden Bodenschienen (3m), und
- auf den Bodenschienen montierten Modulauflagen (4,5), an welchen die Photovoltaikmodule anbringbar sind,
**dadurch gekennzeichnet,**
- **dass** das Montagesystem auf das Dach stellbare und die Bodenschienen tragende Auflageteller (2m) umfasst, und
- **dass** die Auflageteller zur Befestigung von quer oder schräg zu den Bodenschienen verlaufenden Querstreben (6m) an den Auflagetellern ausgelegt sind.

2. Montagesystem nach Anspruch 1, **dadurch gekennzeichnet, dass** die Auflageteller (2m) Erhebungen (2m3) aufweisen, die zur Befestigung der Querstreben (6m) an diesen ausgelegt sind.

3. Montagesystem nach Anspruch 2, **dadurch gekennzeichnet, dass** die Erhebungen (2m3) an ihrer Oberseite ein zum Eindrehen einer Schraube (6m1) ausgelegtes Loch aufweisen.

4. Montagesystem nach Anspruch 2 oder 3, **dadurch gekennzeichnet, dass** der Auflageteller so ausgebildet ist, dass eine bestimmungsgemäß daran befestigte Querstrebe (6m) auf der Oberseite einer bestimmungsgemäß auf den Auflageteller aufgesetzte Bodenschiene zu liegen kommt.

5. Montagesystem nach Anspruch 4, **dadurch gekennzeichnet, dass** die zur Befestigung der Querstreben (6m) ausgelegten Erhebungen (2m3) so hoch sind, dass sich deren Oberseite auf dem selben Höhenniveau befindet wie die Oberseite einer bestimmungsgemäß auf den Auflageteller aufgesetzte Bodenschiene.

6. Montagesystem nach einem der Ansprüche 2 bis 5, **dadurch gekennzeichnet, dass** die Auflageteller (2m) zwei Erhebungen (2m3) aufweisen, die zur Befestigung der Querstreben (6m) an diesen ausgelegt sind, und dass diese Erhebungen so angeordnet sind, dass eine bestimmungsgemäß auf den Auflageteller aufgesetzte Bodenschiene zwischen diesen Erhebungen hindurch verläuft.

7. Montagesystem nach Anspruch 6, **dadurch gekennzeichnet, dass** die zur Befestigung der Querstreben (6m) ausgelegten Erhebungen (2m3) so angeordnet und ausgebildet sind, dass sie zur Einschränkung oder Verhinderung seitlicher Bewegungen der Bodenschiene in Bezug zum Auflageteller beitragen.

8. Montagesystem zur Montage von Photovoltaikmodulen (1) auf Dächern, insbesondere auf Flachdächern, mit
- über dem Dach anzuordnenden Bodenschienen (3), und
- auf den Bodenschienen montierten Modulauflagen (4, 5), an welchen die Photovoltaikmodule anbringbar sind,
wobei miteinander zu verbindende Komponenten des Montagesystems zumindest teilweise über Rastverbindungen miteinander verbunden sind, bei welchen eine Rastnase in eine Rastöffnung einschnappt,
**dadurch gekennzeichnet,**
**dass** die Rastöffnung einen beim Zusammenbau der miteinander zu verbindenden Komponenten zuerst von der Rastnase überlaufenen hinteren Rastöffnungs-Abschnitt, und einen sich an diesen anschließenden, eine größere Breite aufweisenden vorderen Rastöffnungs-Abschnitt umfasst,
**dass** die Rastnase eine Breite aufweist, die größer als die Breite des hinteren Rastöffnungs-Abschnittes, aber kleiner als die Breite des vorderen Rastöffnungs-Abschnittes ist, und
**dass** die Rastnase das vordere Ende einer elastisch bewegbaren Zunge bildet, und dass zumindest ein sich unmittelbar an die Rastnase anschließender Teil der Zunge eine Breite aufweist, die kleiner als die Breite des hinteren Rastöffnungs-Abschnittes ist.

9. Montagesystem nach Anspruch 8, **dadurch gekennzeichnet, dass** die Zunge abgewinkelt und dadurch in einen horizontalen Abschnitt und einen abgewinkelten Abschnitt untergliedert ist.

10. Montagesystem nach Anspruch 9, **dadurch gekennzeichnet, dass** der Winkel zwischen dem horizontalen Zungenabschnitt und dem abgewinkelten Zungenabschnitt 90° beträgt.

11. Montagesystem nach Anspruch 9 oder 10, **dadurch gekennzeichnet, dass** die Zunge so abgewinkelt ist, dass der abgewinkelte Zungenabschnitt die Rastnase und einen sich daran anschließenden Teil der Zunge umfasst.

12. Montagesystem zur Montage von Photovoltaikmodulen (1) auf Dächern, insbesondere auf Flachdächern, mit
- über dem Dach anzuordnenden Bodenschienen (3), und
- auf den Bodenschienen montierten Modulauflagen (4, 5), an welchen die Photovoltaikmodule anbringbar sind,
wobei miteinander zu verbindende Komponenten des Montagesystems zumindest teilweise über Rastverbindungen miteinander verbunden sind, bei welchen eine Rastnase in eine Rastöffnung einschnappt,
**dadurch gekennzeichnet,**
**dass** eine, mehrere oder alle Rastöffnungen durch Vorsehen eines die jeweilige Rastöffnung entlang des Randes umlaufenden Durchzuges verstärkt sind.
